# EUROPEAN PATENT SPECIFICATION

(11) **EP 0 352 820 B1**
(45) Date of publication and mention of the grant of the patent: **02.11.1994**
(21) Application number: 89114076.6
(22) Date of filing: 31.07.1989
(51) Int. Cl.: F02B 27/00, F02M 35/10, F02B 27/02

(54) **Intake system for V-type engine**
Einlassanordnung für Brennkraftmaschine mit V-förmig angeordneten Zylinderreihen
Système d'admission pour moteur avec cylindres disposés en V

(30) Priority: 29.07.1988 JP 191336/88; 27.09.1988 JP 243276/88; 07.10.1988 JP 132190/88 U
(43) Date of publication of application: 31.01.1990
(73) Proprietor: Mazda Motor Corporation, Aki-gun Hiroshima-ken (JP)
(72) Inventor: Okasako, Yasuhiro c/o Mazda shofu-ryo, Hiroshima-shi, Hiroshima-ken (JP); Tanaka, Fusatoshi, Higashi-Hiroshima-shi Hiroshima-ken (JP); Nakayama, Hideo, Hiroshima-shi, Hiroshima-ken (JP); Ishikawa, Takashige, Hiroshima-shi, Hiroshima-ken (JP); Okamura, Kazumi, Higashi-Hiroshima-shi Hiroshima-ken (JP); Matsumoto, Hiroyuki Nakano Building 203, Aki-gun, Hiroshima-ken (JP); Tsuchida, Tsuyoshi, Iwakuni-shi, Yamaguchi-ken (JP)
(74) Representative: Lange, Gerd, Dipl.-Ing.

(56) References cited:
- US-A- 4 708 097
- PATENT ABSTRACTS OF JAPAN, vol. 12, no. 64 (M-672) (2911), 26 February 1988 & JP-A-62210219 (YAMAHA MOTOR CO. LTD) 16.09.1987
- PATENT ABSTRACTS OF JAPAN, vol. 12, no. 260 (M-720) (3107), 21 July 1988 & JP-A-6341621 (YAMAHA MOTOR CO. LTD) 22.02.1988

## Description

### BACKGROUND OF THE INVENTION

### Field of the invention

An intake system for a V-type engine having plural cylinders which are independent to each other in an intake process and are formed in each of a first and second banks, a first collecting intake passage connected to the cylinders of the first bank through the medium of a first independent intake passage passing between both banks, and a second collecting intake passage connected to the cylinders of the second bank through the medium of second independent intake passage, length of each independent intake passage being set equal to that of the other.

### Description of Prior Art

The technology of increasing the charging efficiency of intake air by supercharging intake air supplied to cylinders of an engine by utilizing an inertia effect and a resonance effect has been well known. In the case of supercharging by an inertia effect of intake air, when a negative pressure wave of intake air is generated at an intake port at an initial stage of the air intake valve, this intake air negative pressure wave is transmitted at a sonic speed toward the upstream side in an independent intake passage connected to an intake port and this negative pressure wave is reversed, namely, is converted into a positive pressure wave, at the designated volume part. Then this positive pressure wave is transmitted at a sonic speed toward the downstream side through the same channel and is led to arrive at an intake port of the same cylinder at the ending of a taking-in process or immediately before closing of an intake valve. By this positive pressure wave, intake air is introduced into a combustion chamber so as to enhance its charging efficiency.

On the other hand, in the case where supercharging is effected by a resonance effect of intake air, plural cylinders of an engine are divided into plural groups, each comprising cylinders which are not continuous in igniting time and independent intake passages of plural cylinders of each cylinder group are converged into one collecting intake passage (resonant intake passage) and a pressure reversing part is provided at the designated position of this collecting intake passage. The pressure wave of intake air which is transmitted reciprocatively between the pressure reversing part and each cylinder is resonated in the collecting intake passage. By this resonance, resonant pressure wave having larger amplitude due to pressure vibration generated individually at each cylinder is generated. By this resonant pressure wave, intake air is introduced into a combustion chamber of a cylinder so as to improve the charging efficiency.

In a conventional V-typed engine having a pair of opposite banks as shown by the Japanese Patent Application Laying Open Gazette No.56-52522, for example, cylinders of each bank are communicated with a respective independent intake passage and an upstream end of this dependent intake passage is connected to a pair of collecting intake passages, end portions of which are connected with each other into a loop passage. This loop passage (two collecting intake passages) is arranged between two banks.

In such intake system for a V-type engine, as mentioned above a resonance state is generated between cylinders at each bank and by the positive pressure wave of intake air generated by this resonance, supercharging can be done, namely, by putting together cylinders which do not adjoin each other in the air taking-in process at each bank, a pressure wave which is transmitted reciprocatively between a certain cylinder and a joining part (pressure reversing part) of the collecting intake passage is resonanted in the collecting intake passage to generate a resonance pressure wave and by this resonance pressure wave, intake air is caused to act on the air taking-in process at the other cylinder for supercharging.

By making longer the length of each independent intake passage, supercharging by an inertia effect of intake air at a high speed operating region of the engine can be obtained, in addition to supercharging by the resonance effect.

However, in the case where a pair of collecting intake passages are arranged between two banks as mentioned above, a layout of long independent intake passage becomes complicated. Moreover, it is unavoidable that with the increase in length of the independent intake passage, height of the collecting intake passage increases. Therefore, when this is applied to an engine for a passenger car, there arises the problem that a bonnet becomes higher.

As shown in U.S. Patent No.4,708,097, it is thinkable to arrange both collecting intake passage on one of the banks of an engine in such a fashion that one is put on another, namely, one-sided arrangement of the collecting intake passages. In this case, however, difficulty is found in making equal the lengths of independent intake passages corresponding to cylinders of both banks. It is also difficult to make independent intake passages of both banks almost the same in shape (degree of bending) and there is a fear that the degree of bending (radius of curvature) of an independent intake passage communicating with a cylinder of a bank on the side where both collecting intake passages are arranged becomes larger (becomes smaller in the radius of curvature) than that of an independent intake passage communicating with a cylinder of the other banks. As a result, intake resistance is different between both banks and therefore charging efficiency of intake air to the cylinder between both banks is irregular.

In the above intake system which is intended to obtain supercharging by a resonance effect of intake air, the length of transmitting channel of pressure wave becomes longer than the length of transmitting channel of pressure wave of an inertia supercharging effect. Therefore, good resonance effect can be obtained in the low/middle rotation region of the engine where the opened duration of time of an intake valve is long. However, such rotation region is limited to a narrow rotation region corresponding to the length of intake channel and accordingly it is difficult to utilize a resonance supercharging effect at a wide rotation region.

With the above disadvantages in view, there has been suggested such intake system in which a resonance intake passage is composed by two kinds of passage, i.e., with respect to transmittance of pressure wave, an intake passage for high speed with the length of a substantial intake channel set short and an intake passage for low speed with the length of a substantial intake channel set long (as disclosed by the Japanese Patent Application Laying Open Gazette No.62-210219). In this intake system, a good resonance effect can be obtained throughout a wide rotation region by utilizing an intake passage for high speed in the region of high rotation and an intake passage for low speed in the region of low rotation.

In the above intake system, however, since it is provided with two kinds of intake passage, i.e., intake passages for low speed and high speed, the intake system becomes large in size and difficulty is found in preparing a layout for a motor car of low bonnet type. In the V-type engine, if an intake system of each bank is arranged above a corresponding bank as is usually practiced so as to make equal the lengths of independent intake passages to the cylinders of both banks, a layout for avoiding interrefence with the bonnet is rendered difficult. Especially in the case of V-type engine of so-colled "lateral disposition" (the engine disposed laterally with respect to the longitudinal direction of the vehicle), if an intake system is arranged above each bank, more difficulty is found in a layout because of a bonnet being inclined in such a fashion that it becomes lower toward the front.

The present invention has been made with the above points in view and has for its object, in the case where both collecting intake passages are arranged one-sidedly on one of the banks, to make substantially equal and smaller the degrees of bending of independent intake passages of both banks and to equalize intake charging efficiencies between cylinders of both banks by improving the shape of each independent intake passage and its relative arrangement to the collecting intake passage.

Another object of the present invention is, in the intake system of engine provided with intake passages for high speed and low speed, to contemplate the compactness of intake system so that a layout can be easily made even for a vehicle with a low bonnet.

### SUMMARY OF THE INVENTION

The objects are obtained by the features as lined out in the claims. In accordance with the invention, the second collecting intake passage is located above the first group of independent intake passages and communicates with the cylinders of the second bank through the second group of independent intake passages passing above the space between the first and second banks.

In order to obtain a conspicuous effect when a V-type engine is disposed laterally with respect to the longitudinal direction of the vehicle body said pair of banks are arranged in such a fashion that both are opposed to each other in the longitudinal direction of the vehicle and the first bank above which the first collecting intake passage is disposed is located rearwardly of the longitudinal direction of the vehicle body.

In order to make the height of the intake system and in its turn the height of the engine as a whole still lower, namely, to make the engine compact in size and to increase the strength of the intake system, an independent intake pipe which forms the independent intake passage connectede to said first collecting intake passage is formed integrally with an intake air collecting part which forms the second collecting intake passage, with a common partition wall therebetween.

Generally, from the arrangement of cylinders at each bank, both banks are shifted with respect to each other in their lengthwise direction. In order to make even the distance from the position of a throttle valve to both collecting intake passages and to improve divisibility of intake air to cylinders of both banks by utilizing such shifting of banks with respect to each other, in the case where both banks of the engine are shifted with respect to each other in car width direction due to lateral disposition of the engine (the engine is disposed laterally with respect to the longitudinal direction of the vehicle), the first collecting intake passage is shifted with respect to the second collecting intake passage in the same direction as the direction in which the second bank is shifted with respect to the first bank.

In order to improve serviceability of an ignition plug by enlargeing the space around a plug hole of a cylinder head in the first bank, the first independent intake passage is bent at its intermediate part in the same direction as the direction in which the first bank is shifted with respect to the second bank after it extends at a right angle to the direction along both banks from the first collecting intake passage.

In order to increase rigidity between both banks and to restrict deformation due to relative thermal expansion variations between both banks during running of the engine, cylinder heads in both banks are connected integrally by spacers.

In this case, in order to avoid interference between fitting bolts of spacers and second independent intake passage, the second independent intake passage is extended at a right angle to the direction along both banks from the second collecting intake passage and is bent at its intermediate part in the same direction as the direction in which the second bank is shifted with respect to the first bank.

When an intake system is attached to an engine, if parts composing the intake system, such as intake pipes, can be attached from right above, it improves attachability of the intake system. Therefore, the top of the spacer is made plane.

In the construction of supplying return exhaust gas which is a part of exhaust gas from the engine and blow-by gas in a crank room to a surge tank, oil in blow-by gas and water in return exhaust gas collect in a surge tank. This raises a problem. In order to settle this problem, an exhaust return passage for returning a part of exhaust gas from the engine to an intake system and a blow-by gas passage for supplying blow-by gas in an crank room of the engine to an intake system are formed at the spacer. The downstream ends of these passages are opened to the independent intake passage. By this construction, divisibility of both gases to each cylinder can be improved.

As blow-by gas in the blow-by gas passage contains engine oil, it is desired to prevent this oil from flowing backward to the exhaust return passage. For this purpose, the blow-by gas passage is arranged at the underside of the exhaust return passage in the spacer.

In the case where fuel is jet-supplied to cylinders of each bank by infectors, only one fuel dis. pipe for supplying fuel to each injector is arranged between banks. By this arrangement with a reduced number of pipes, space between banks can be utilized effectively.

In order to enhance a cooling effect for injectors which jet-supply fuel to the independent intake passage of each cylinder, each injector is arranged in between both banks at the underside of the independent intake pipe forming the independent intake passage. By this arrangement, as compared with the case where plural independent intake pipes are all arranged at the middle of both banks, each injector is made easy to be exposed to running wind and its heat radiability can be enhanced. As a result, when an engine is started in warmed condition, evaporation of fuel in each injector can be suppressed and starting ability of the engine can be improved.

The intake port of each cylinder is bent upwardly as it parts from the cylinder and the injector is arranged on an extension line of the cylinder side portion of this intake port. By this construction, fuel jetted from the injector can hit the rear of an umbrella part of the intake valve of each cylinder and it is possible to increase the distance between the injector and the umbrella part of the intake valve. Thus, evaporation/atomization of jetted fuel can be promoted.

The second independent intake passage is extended at right angle to the direction along both banks from the second collecting intake passage and is bent at its intermediate part in the same direction as the direction in which the second bank is shifted with respect to the first bank so that the first independent intake passage corresponding to the first bank extends in a straight line, when viewed from above. By this construction, the first independent intake passage having a larger degree of bending in the direction along a perpendicular plane is make rectilinear, when viewed from above, and the second independent intake passage having a small degree of bending in the direction along a perpendicular plane bends, when viewed from above. This indicates that the irregularity of intake air resistance to cylinders of both banks can be reduced still more by equalizing the intake air resistance in both independent intake passages.

In order to attain another object of the present invention, regarding the transmittance of pressure wave each collecting intake passage is composed by the intake passage line for high speed, with the substantial intake channel length set comparatively short and the intake passage line for low speed whose downstream end is connected to said intake passage line for high speed, with the substantial intake channel length set comparatively longer than the intake passage line for high speed. Said intake passage line for high speed and said intake passage line for low speed are formed integrally.

In the intake system for a V-type engine euqipped with intake passages for high speed and low speed, in order to reduce the height of the intake system and to utilize the space effectively, each collecting intake passage is composed by the intake passage line for high speed and the intake passage line for low speed as mentioned above, in each bank composed by cylinders which are not continuous in the intake process. Furthermore, each intake passage line for high speed and each intake passage line for low speed in both banks are all arranged above the first bank and intake passage lines for low speed to be connected to intake passage lines for high speed on the low position side are arranged on said intake passage lines for high speed. On the other hand, intake passage lines for low speed to be connected to intake passage lines for high speed on the high position side are arranged at the side portion of said intake passage lines for high speed.

In order to enable us to carry out supercharging of intake air by an inertia effect and/or a resonance effect in a wide rotation region extending from a low rotation region to a high rotation retion of the engine through the changeover of the intake passage line for high speed and the intake passage line for low speed, a collecting part is provided at one side of the first bank for collecting the upstream ends of both collecting intake passages and a communicating passage is provided at the other side of the first bank for communicating the downstream ends of both collecting intake passages with each other. A throttle valve is provided at a common intake passage on the upstream side of said collecting part and a switch valve for opening and shutting the communicating passage is also provided. Furthermore, a switch valve for opening and shutting the intake passage line for high speed is provided at the upstream end of the intake passage line for high speed in each bank. These two kinds of switch valve are so designed that both of them are opened at the high rotation region of the engine but at the medium rotation region, while the switch valve for the communicating passage is shut, the switch valve for the intake passage line for high speed is opened. At the low rotation region, both of them are shut.

In this case, in order to obtain a pressure wave reversing part of the intake passage line for low speed in utilizing a resonance effect, even if the switch valve for intake passage line for high speed is shut, a collecting part for collecting the upstream ends of both collecting intake passage line is provided at one side of the first bank and the upstream ends of intake passage lines for low speed in each bank are communicated with the collecting part at the downstream side of the upstream end of intake passage lines for high speed. Communicating holes of the upstream ends of intake passage lines for low speed in each bank with the collecting part may be arranged at an upper side than communicating holes of the upstream ends of intake passage lines for high speed with the collecting part.

The upstream ends of said both collecting intake passages are connected to the common intake passage for introducing intake air into said intake passages. Said common intake passage is formed in such a fashion that it gradually faces the front side of the vehicle body as it gradually faces the upstream side from a connecting part with the collecting intake passage. By this construction, the intake quantity at the outside of the common intake passage can be made larger than that at the inside due to inertia and centrifugal force of intake air flowing in the common intake passage. By utilizing this difference in the intake quantity, intake air can be supplied to the first independent intake passage having a larger degree of bending in the direction along a perpendicular plane in a more quantity than the second independent intake passage having a small degree of bending of the same nature and by equalizing the intake air resistance in both independent intake passages, irregularity of intake air resistance to cylinders in both banks can be reduced.

### BRIEF DESCRIPTION OF THE DRAWINGS

The nature and advantages of the present invention will be understood more clearly from the following detailed description of the present invention made with reference to the accompanying drawings, in which:
Fig.1 shows a cross section, taken along the line I-I in Fig.2;
Fig.2 is a plan view showing a main part of a V-type engine according to the first embodiment of the present invention, in which a head cover is taken away;
Fig.3 shows the second embodiment of the present invention and corresponds to Fig.2;
Fig.4 is a plan view of an intake system for a V-type engine according to the third embodiment of the present invention;
Fig.5 shows a V-type engine according to the third embodiment and corresponds to Fig.1;
Fig.6 is a side view of the part downstream of the flange part of the intake system shown in Fig.4;
Fig.7 is a cross section, taken along the line VII-VII in Fig.6;
Fig.8 is a cross section, taken along the line VIII-VIII in Fig.4;
Fig.9 is a cross section, taken along the line IX-IX in Fig.4;
Fig.10 is a cross section, taken along the line X-X in Fig.4;
Fig.11 is a cross section, taken along the line XI-XI in Fig.4;
Fig.12 is a cross section, taken along the line XII-XII in Fig.4;
Fig.13 shows the positional relation of an intake passage for high speed, an intake passage for low speed and an independent intake passage at the parallel part of the intake system shown in Fig.4; and
Fig.14 is a side view of a communicating passage with a lid member taken away, as viewed from the downstream side.

### DETAILED DESCRIPTION OF THE INVENTION

Embodiment of the present invention are described below on the basis of the drawings.

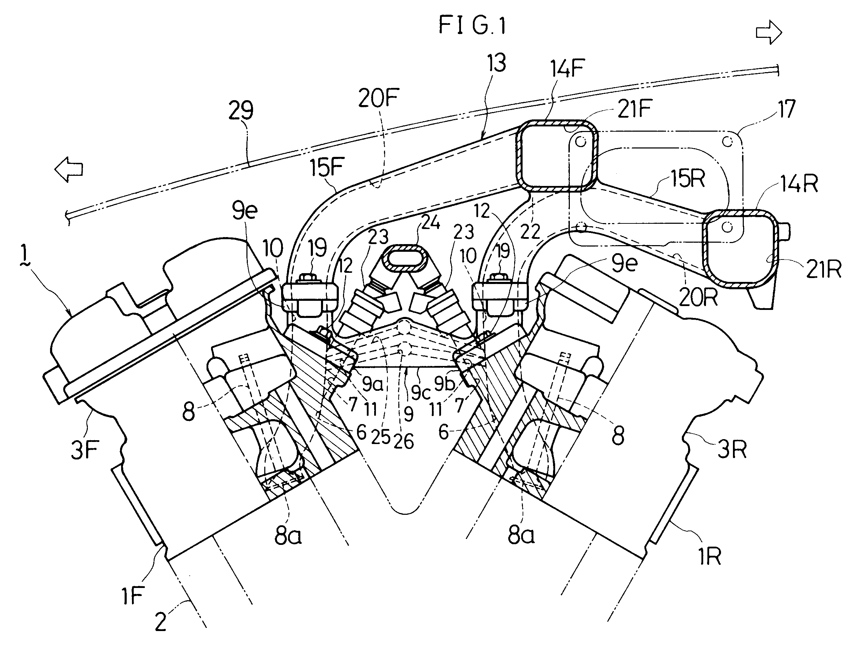

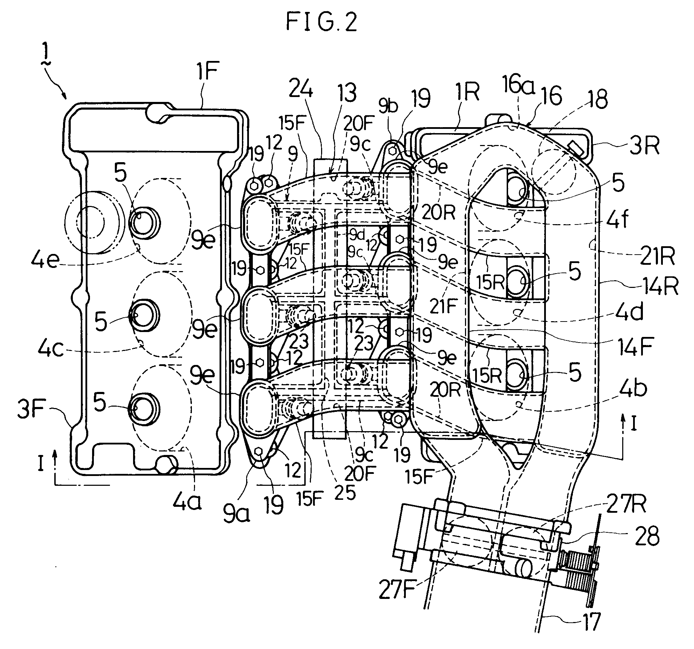

Fig.1 and Fig.2 show the first embodiment in which the present invention is applied to a laterally disposed V-type engine of a passenger car (in Fig.2 cylinder head covers are removed). In the drawings, reference numeral 1 designates a DOHC V-type engine having a front side bank 1F and a rear side bank 1R which are opposite to each other in the longitudinal direction of the vehicle body. This engine 1 is provided with a cylinder block 2 of V-like shape in cross section and cylinder heads 3F, 3R connected to partial surfaces of the banks 1F, 1R of the cylinder block 2. The front side bank 1F carries the first cylinder 4a, the third cylinder 4c and the fifth cylinder 4e and the rear side bank 1R carries the second cylinder 4b, the fourth cylinder 4d and the sixth cylinder 4f. These six cylinders 4a -4f are fired in the firing order as shown by cylinder numbers (from the first cylinder 4a to the sixth cylinder 4f).

Three plug holes 5 in which an ignition plug (not shown in the drawing) for igniting intake air in a combustion chamber of each cylinder 4a - 4f is fitted are open at the position substantially on the center line of the cylinder. Formed in each of the cylinder heads 3F, 3R are three intake ports 6, one end of which is open in a combustion chamber of each cylinder 4a - 4f, and three fuel jetting ports 7 which communicate with each intake port 6. The other end of each said intake port 6 is open in elliptical shape at the side (facing between banks 1F, 1R) of each cylinder head 3F, 3R. Each fuel jetting port 7 is open at one side of the other end opening of the intake port 6 as it overlaps the intake port 6. Reference numeral 8 designates an intake valve for opening and shutting the opening end of each intake port 6 to the combustion chamber. This intake valve 8, together with an exhaust valve (not shown in the drawing), is opened and shut by a valve operating mechanism of DOHC type.

A spacer 9 is disposed between both cylinder heads 3F, 3R in such a fashion that it joins both banks 1F, 1R. This spacer 9 has integrally a pair of (first and second) fitting parts 9a, 9b fastened by bolts 12, three lateral ribs 9c to connect said both fitting parts 9a, 9b and a vertical rib 9d to interconnect said lateral ribs 9c at the central part thereof. Three port forming parts 9e are formed at each fitting part 9a, 9b at the part corresponding to the other end opening of each intake port 6. By these port forming parts 9e in pairs, both fitting parts 9a, 9b are connected with each other through the medium of the lateral ribs 9c. Formed though said each port forming part 9e are a port 10 of elliptical shape in cross section communicating concentrically with the fuel jetting port 7. The upper surface of each port forming part 9e is made plane.

Reference numeral 13 designates an intake manifold formed integrally by casting or the like. This intake manifold 13 carries a front side surge tank 14F and a rear side surge tank 14R as intake collecting parts arranged in parallel with each other in the direction along the banks 1F, 1R (in vertical direction in Fig.2), three front side independent intake pipes 15F which are connected integrally with the side (the opposite side of the rear side surge tank 14F) of the front side surge tank 14F and extend in parallel with one another in the direction of the opposite side of the rear side surge tank 14F, and three rear side independent intake pipes 15R which are connected integrally with the side (on the side of the front side surge tank 14F) of the rear side surge tank 14R toward the front side surge tank 14F. The downstream ends of said both surge tanks 14F, 14R are connected with each other by a communicating passage 16a in a communicating pipe 16 with a switchover valve 18 therebetween. The upstream ends of the surge tanks 14F, 14R are connected with each other by a collecting pipe 17. This collecting pipe 17 is connected to both surge tanks 14F, 14R through the medium of a throttle body 28 having throttle valves 27F, 27R therein. Said both throttle valves 27F, 27R are provided on the same axis and opened and shut simultaneously.

The lower ends of said front side independent intake pipes 15F, 15R are fastened to the upper surface of the corresponding port froming parts 9e of the first fitting parts 9a in the spacer 9 by the fitting bolts 19 and the lower ends of the rear side independent intake pipe 15R are fastened to the upper surfaces of the corresponding port forming parts 9e of the second fitting parts 9b in the spacer 9 by the fitting bolts 19.

Under the above arrangement, three front side independent intake passage 20F located between both banks 1F, 1R and communicating with each cylinder 4a, 4c, 4e of the front side bank 1F are formed by each intake port 6 of the cylinder head 3F in the front side bank 1F, each port 10 of the first fitting part 9a of the spacer 9 and each front side independent intake pipe 15F.By the front side surge tank 14F, a front side collecting intake passages 20F are connected is formed. On the other hand, three rear side independent intake passages 20R located between both banks 1F, 1R and communicating with each cylinder 4b, 4d, 4f of the rear side bank 1R are formed by each intake port 6 of the cylinder head 3R in the rear side bank 1R, each intake port 6 of the cylinder head 3R in the rear side bank 1R, each port 10 of the second fitting part 9b of the; spacer 9 and each rear side independent intake pipe 15R. Also, by the rear side surge tank 14R, a rear side collecting intake passage 21R to which the upstream ends of the rear side independent intake passages 20R are connected is formed. Lengths of the front side and the rear side independent intake passages 20F, 20R are made equal to each other.

As shown in Fig.1, the intake port 6 in each cylinder head 3F,3R is formed in such a fashion that it bends upwardly as it parts from the center of cylinder 4a -4f. By this shape, each independent intake passage 20F, 20R extends substantially perpendicularly and upwardly from the cylinders 4a -4f. Each independent intake pipe 15F, 15R bends in the middle thereof to the side of the rear side bank 1R (back side). A rear side collecting intake passage 21R (the first collecting intake passage) formed in the rear side surge tank 14R is arranged above the rear side bank 1R carrying the second, the fourth and sixth cylinders 4b, 4d, 4f communicating with said rear side collecting intake passage 21R. A front side collecting intake passage 21F (the second collecting intake passage) is arranged above the rear side independent intake passage 20R connected to said rear side collecting intake passage 21R. By this integration of the intake manifold 13, three rear side independent intake pipes 15R forming each rear side independent intake passage 20R connected to said rear side collecting intake passage 21R are connected integrally with the front side surge tank 14F (intake collecting part), with a common partition wall 22 therebetween.

As shown in Fig.2, each front side independent intake pipe 15F extends from the front side surge tank 14F at a right angle to the direction along the banks 1F, 1R and bends at the intermediate part thereof in the direction of shifting in location of the front side bank 1F with respect to the rear side bank 1R (downward direction in the drawing). The rear side surge tank 14R is arranged at such position that it is shifted in location with respect to the front side surge tank 14F in the same direction as the direction in which the front side bank 1F is shifted in location with respect to the rear side bank 1R. By this shifting in location, each rear side independent intake pipe 15R extends from the rear side surge tank 14R at a right angle in the direction along the banks 1F, 1R and bends at the intermediate part thereof in the direction of shifting in location of the rear side bank 1R with respect to the front side bank 1F.

In each injector fitting hole 11 in the spacer 9 is fitted an injector 23. This injector fitting hole 11 and the fuel jetting port 7 of each cylinder head 3F, 3R are arranged on the slant so that the center line thereof passes the center of the umbrella part 8a of the intake valve 8 at the downstream end of the intake port 6. By this arrangement, fuel can be jetted from the injector 23 to the back of the umbrella part 8a of the intake valve 8.

Due to slanting of said fuel jetting port 7 and the injector fitting hole 11, each injector 23 is arranged in such a fashion that it faces the side of the opposite banks 1F, 1R. Therefore, upper end portions of opposite injectors 23 in pairs at the front side and the rear side banks 1F, 1R are close to each other. One fuel dis. pipe 24 extending along the banks 1F, 1R is arranged between the upper end portions of both injectors 23. Each injector 23 is connected to this fuel dis. pipe 24 so that fuel can be supplied to each injector 23 from this single fuel dis. pipe 24.

Provided through the spacer 9 are an exhaust recirculating passage 25 for flowning a part exhaust gas back to an intake system and a blow-by gas passage 26 for supplying blow-by gas collected in a crank room (not shown in the drawing) below the cylinder block 2 for combustion. Said exhaust recirculating passage 25 is branched from the vertical rib 9b into each lateral rib 9c of the spacer 9 and the downstream end of each branch is open to each port 10 at the side of the injector fitting hole 11. Similarly, the blow-by gas passage 26 is branched at below the exhaust recirculating passage 25 into each lateral rib 9c from the vertical rib 9d and the downstream end thereof is open to each port 10 at the side of the injector fitting hole 11. In Fig.1, reference numeral 29 designates a bonnet of the passenger car.

In the above embodiment, the switchover valve 18 is shut at a low speed region of the engine 1 and the communicating pipe 16 of the intake manifold 13 is blocked. By this closing of the switchover valve 18, the front side and the rear side collecting intake passages 21F, 21R in the surge tanks 14F, 14R communicate with each other in the collecting pipe 17 at the upstream side. In this state, resonance frequency of intake resonance generated among cylinders 4a, 4c, 4e (or 4b, 4d, 4f) in the bank 1F (or 1R) becomes low and accordingly a resonance effect is displayed at a low speed region of the engine 1 and intake air is supercharged, namely, after the negative pressure waves of intake generated near the intake port 6 at the initial stage of the intake process of each cylinder 4a, 4c, 4e (or 4b, 4d, 4f) in the bank 1F (or 1R) are transmitted to each intake port 6, each port 10 of the spacer 9, the independent intake passage 20F (or 20R) in each independent intake pipe 15F (or 15R), they reflect at the joining part in the collecting pipe 17 and are inverted into positive pressure waves. These positive pressure waves return to the intake port 6 of the cylinders 4a, 4c, 4e (or 4b, 4d, 4f) of the bank 1F (or 1R). By the pressure waves transmitted reciprocatively between this cylinder 4a, 4c, 4e (or 4b, 4d, 4f) and the collecting pipe 17, intake air is put in resonant state and resonant pressure waves of large amplitude are generated. By these pressure waves, intake air is pushed in the intake port 6 and supercharging of intake air is carried out.

On the other hand, when the engine 1 moves to a high speed region, said switchover valve 18 is opened and both collecting intake passages 21F, 21R communicate with each other through the communicating pipe 16. In this state, since the negative pressure waves of intake being transmitted reflect in the communicating pipe 16 and are inverted into positive pressure waves, resonance frequency rises. Thus, intake air can be resonance-supercharged effectively even at a high speed region of the engine 1.

Since the independent intake passages 20F, 20R are long in length, at a high speed region of the engine 1 negative pressure waves of intake generated near the intake port 6 at the initial stage of the intake process of each cylinder 4a, 4c, 4e (or 4b, 4d, 4f) of the bank 1F (or 1R) and are inverted into positive pressure waves, which act on the ending stage of the intake process of the same cylinder 4a, 4c, 4e (or 4b, 4d, 4f). Thus, supercharging state due to an inertia effect of intake can be obtained.

In this case, for the reasons that the lengths of each independent intake passage 20F, 20R are set equal to each other, the independent intake passages 20F, 20R extend substantially perpendicularly and upwardly from each cylinder 4a -4f, the rear side collecting intake passage 21R in the rear side surge tank 14R is arranged above the rear side bank 1R corresponding to said rear side collecting intake passage 21R and the front side collecting intake passage 21F is arranged at the upper side of the rear side independent intake passage 20R connected to the rear side collecting intake passage 21R, the degree of bending of the rear side independent intake passage 20R corresponding to the rear side bank 1R in which both collecting intake passages 21F, 21R are arranged, becomes comparatively small. On the other hand, each rear side independent intake passage 20R corresponding to the rear side bank 1R is arranged as it overlaps the front side collecting intake passage 21F, the position of the front side collecting intake passage 21F in height becomes low and the degree of bending of the front side bank 1F increases the more. As a result, degrees of bending of both independent intake passage 20F, 20R are made almost equal to each other. Therefore, even in such construction that each independent intake passage 20F, 20R is set long in length and both collecting intake passages 21F, 21R are arranged one-sidedly at the rear side bank 1R side, it is possible to make the degrees of bending of both independent intake passages 20F, 20R substantially equal and smaller and to equalize the intake filling efficiencies among cylinders 4a -4f of both banks 1F, 1R.

The independent intake pipe 15R forming each rear side independent intake passage 20R connected to the rear side collecting intake passages 21R is formed integrally with the front side surge tank 14F forming the front side collecting intake passage 21F, with a common partition wall 22 therebetween. Therefore,it is possible to make the position in height of the front side collecting intake passage 21F still lower and also to make the intake system and even the engine 1 as a whole lower in height and compact. Moreover, since the rear side bank 1R side which becomes higher due to one-sided arrangement of both surge tanks 14F, 14R in the intake manifold 13 is arranged at the rear side of the vehicle body, change in height of the intake system corresponds to the inclining direction of a bonnet 29 which inclines frontward. Thus, the height of a bonnet 29 can be set lower in height. As each independent intake pipe 15F, 15R is mode integral with the surge tank 14F, 15R, it is possible to increase the strength of the intake system.

The rear side surge tank 14R is shifted in location with respect to the front side surge tank 14F in the same direction as the direction in which the front side bank 1F is shifted in location with respect to the rear side bank 1R and due to this shifting in location it is possible to make equal the distance from the throttle body 28 to the front side surge tank 14F and to the rear side surge tank 14R. Therefore, divisibility of intake to cylinders 4a - 4f of both banks 1F, 1R is enhanced and the resonance tuning r.p.m.'s of both banks 1F, 1R conform to each other. Thus, improvement of output of the engine 1 and reduction in noise, vibration, etc. can be contemplated.

Moreover, each rear side independent intake pipe 15R extends from the rear side surge tank 14R at a right angle to the direction along the banks 1F, 1R and then bends at the intermediate part thereof in the direction of shifting in location of the rear side bank 1R with respect to the front side bank 1F. By this bending, space around each plug hole 5 of the cylinder head 3R in the rear side bank 1R becomes large. Therefore, even if the engine 1 is of DOHC type in which the ignition plug is arranged at the central part of each cylinder head 3F, 3R in width direction, service space of the ignition plug can be secured fully.

As each front side independent intake pipe 15F extends from the front side surge tank 14F at a right angle to the direction along the banks 1F, 1R and then bends at the intermediate part thereof in the direction of shifting in location of the front side bank 1F with respect to the rear side bank 1R, the position of the fitting bolts 12 for fitting the spacers to the cylinder heads 3F, 3R of the engine 1 does not interference with each said front side independent intake pipe 15F. Thus, serviceability of the intake manifold 13 in installation can be improved.

As the cylinder heads 3F, 3R are connected integrally with each other by the spacer 9, it is possible to reinforce between both banks 1F, 1R and as a result, it is possible to control the deformation due to relatively thermal expansion variations between both banks 1F, 1R and to prevent effectively generation of cracks, etc.

Since the upper surfaces of each port forming part 9e of the spacer 9 is made plane, when attaching the take system to the engine 1, we have only to attach the spacer 9 to the cylinder head 3F, 3R by the bolt 12, to set the intake manifold 13 from right above and to fasten the independent intake pipe 15F, 15R to the port forming part 9e of the spacer 9 by the bolt 19. Thus, attachability of the take system can be improved.

The exhaust recirculating passage 25 and the blow-by gas passage 26 are formed in the spacer 9. Exhaust gas for recirculation and blow-by gas are supplied to each independent intake passage 20F, 20R through the medium of the passage 25, 26 in the spacer 9. Therefore, there is no fear that oil in blow-by gas and water in exhaust gas for recirculation are collected in the surge tank as in the case of supplying these gases to the intake passage in the surge tank and divisibility of both gases to each cylinder 4a - 4f can be enhanced.

Moreover, as the exhaust recirculating passage 25 is formed at the upper side in the spacer 9 and the blow-by gas passage 26 is arranged at the underside thereof, there is no danger that oil in the blow-by gas flows backward into the exhaust recirculating passage 25.

There is provided one fuel dis. pipe 24 between both banks 1F, 1R and fuel is appulied from this one fuel dis. pipe 24 to injectors 23 corresponding to cylinders 4a - 4f of both banks 1F, 1R. Thus, as compared with the case where one each fuel dis. pipe is arranged for cylinders 4a - 4f of each bank 1F, 1R, space betwen the banks 1F, 1R can be utilized effectively.

In between both banks 1F, 1R, as the independent intake pipes 15F, 15R corresponding to each cylinder 4a - 4f are arranged at the upper side and each injector 23 is arranged at the lower side, six independent intake pipes 15F, 15R corresponding to each cylinder 4a - 4f are divided into three each. Therefore, as compared with the case where six independent intake pipes are all arranged at the center of both banks 1F, 1R, each injector 23 is made easy to be exposed to travelling wind or the like and its heat radiation is enhanced. As a result, even when the engine 1 is restarted after it was stopped in warmed state, evaporation of fuel in each injector 23 can be restricted and starting ability of the engine 1 can be improved.

As each port 6 bends upwardly as it parts from the cylinders 4a - 4F and the injector 23 is arranged on the extension line of the cylinder side portion, fuel jetted from the injector 23 can hit the back of the umbrella part 8a of the intake valve 8 and the distance between the injector 23 and the umbrella part 8a of the intake valve 8 is increased. Thus, evaporation/atomization of jetted fuel can be promoted.

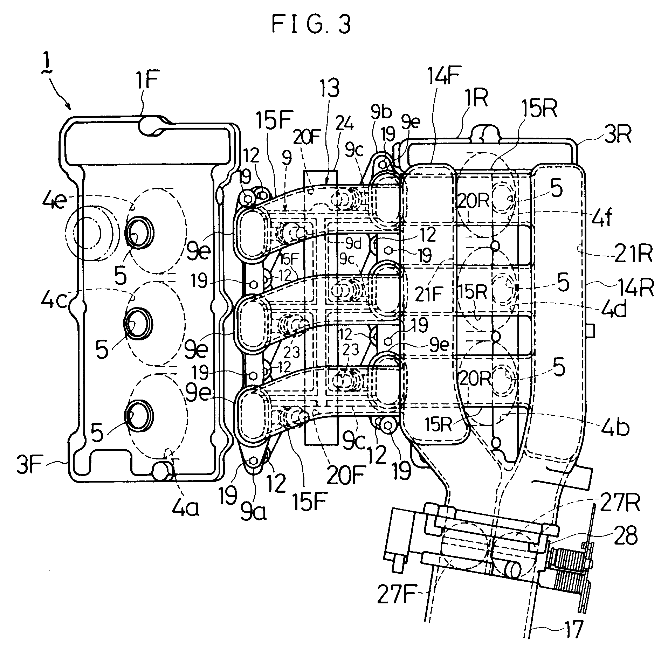

Fig.3 shows the second embodiment of the present invention. Like reference numeral are given to the same parts as those in Fig.2 and detailed explanation of them is omitted. In this embodiment, each rear side independent intake pipes 15R (rear side independent intake passage 20R) are rectinear, as seen from above.

In the case of this embodiment, therefore, the rear side independent intake pipe 15R is rectinear as seen from above, through its degree of bending in the direction along the perpendicular plane is large, and the front side independent intake pipe 15F (on the left side in the drawing) is bending as seen from above, though its degree of bending is small. Therefore, intake resistance in the front side and the rear side independent intake passages 20F, 20R, each formed in both independent intake pipes 15F, 15R, are made still equal and the effect of reduced irregularity of the intake resistance can be obtained more certainly.

In each of the above embodiments, the collecting intake passages 21F, 21R are formed in the surge tanks 14F, 14R. However, the present invention can be applied to an intake system in which the collecting intake passage is formed in cylindrical shape of small capacity, with similar action and effect to the above embodiment.

It goes without saying that the present invention is applicable to a various V-type engines, as well as DOHC V-type 6-cylinder engine 1 which is disposed laterally with respect to the longitudinal direction of the passenger car.

In each of the above embodiment, intake upstream sides of both surge tanks 14F, 14R meet each other at the collecting pipe 17 upstream of a throttle body 28 but a communicating part which communicates both collecting intake passages 21F, 21R with each other may be provided downstream of the throttle valves 27F, 27R and it is possible to narrow down throttle valves to only one and to branch an intake passage at the downstream side of the throttle valve.

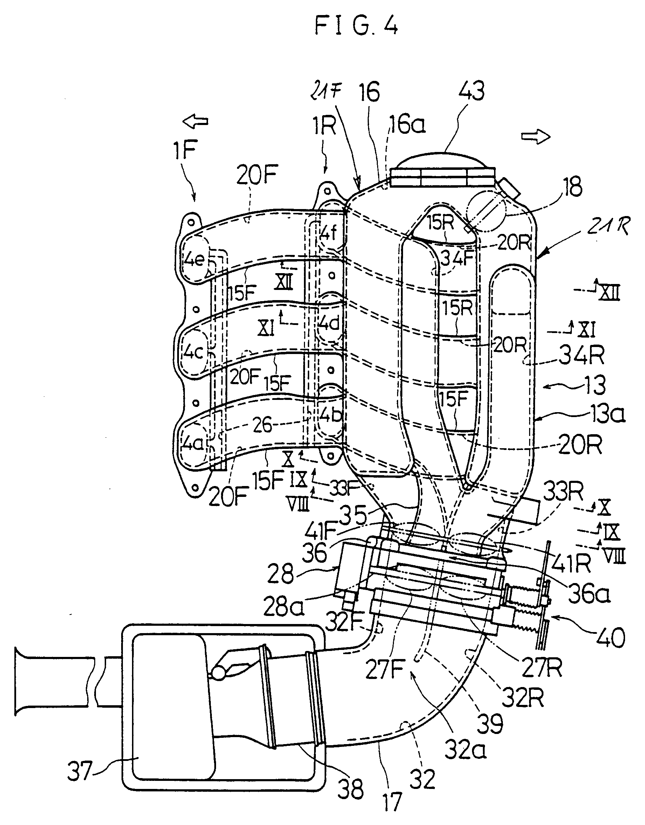

The third embodiment of the present invention will be described below, with reference to Fig.4 -Fig.14.

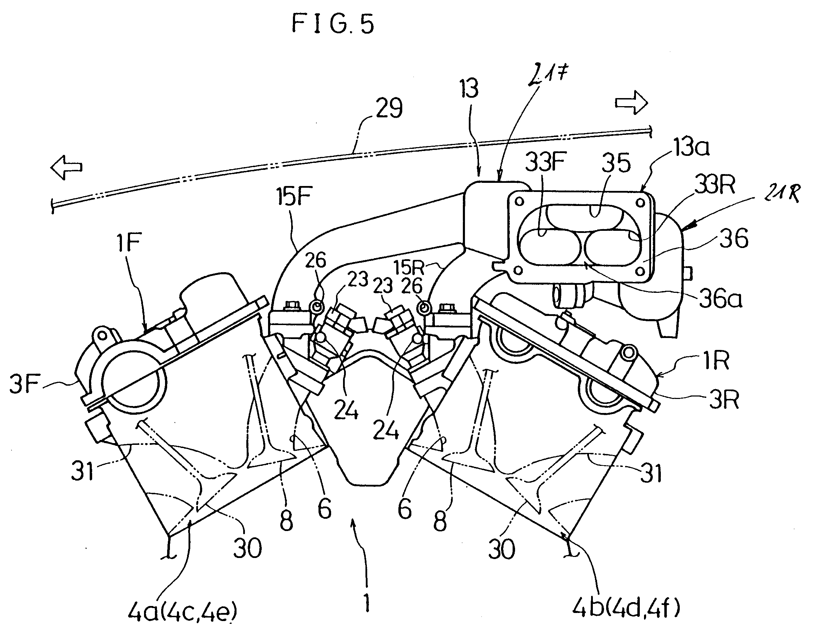

As shown in Fig.4 and Fig.5, in the 6-cylinder laterally disposed v-type engine 1 ( to be fired in the order of the first to the sixth cylinders 4a -4f), while the first, the third and the fifth cylinders 4a, 4c, 4e which are not continuous in the igniting order are arranged at the front side bank 1F, as seen in the longitudinal direction of the vehicle body, the second, the fourth and the sixth cylinders 4b, 4d, 4f which are not continuous in the igniting order are arranged at the rear side bank 1R.

When the intake valve 8 opens, the first cylinder 4a, for example, inhales intake air from the front side independent intake passage 20F into a combustion chamber in the cylinder 4a via the intake port 6, which intake is compressed by a piston (not shown in the drawing) and is ignited by a ignition plug for combustion and when an exhaust valve 30 in opened, combustion gas is exhausted to an independent exhaust passage 31. In the front side independent intake passage 20F, the injector 23 which jets fuel into intake is provided slightly upstream of the intake port 6, with its jet orifice slanting to the downstream side. Fuel is suppled to the injector 23 through the fuel dis. pipe 24 corresponding to each bank 1F, 1R. Blow-by gas is introduced into a combustion chamber of the cylinder 4a through the blow-by gas passage 26. The second - the sixth cylinder 4b -4f have similar construction.

In the engine 1, both banks 1F, 1R are disposed laterally in such a fashion that each of them faces the car width direction in the engine room at the underside of a bonnet 29 with a gentle slop upward to the rear side of the vehicle. The intake manifold 13 connected to a common intake passage 32 (refer to Fig.4) through the medium of the throttle body 28 is arranged between an upper end portion of the cylinder head 3F of the rear side bank 1R and the bonnet 29. As at the upper part of the rear side bank 4R the bonnet 29 becomes comparatively high and space above the cylinder head 3R is secured to a comparatively large extent in vertical direction, the intake manifold 13 can be disposed without interference with the bonnet 29. This intake manifold 13 is composed by a manifold proper 13a and independent intake passage pipes 15F, 15R. This manifold proper 13a, as described later, acts as a volume part for stabilizing supply of intake air and also acts as a resonance passage for generating a resonance effect effectively at the time of middle/low speed. At the time of high speed, it acts as a pressure reversing part for generating an inertia effect effectively. Formed in each independent intake passage pipe 15F, 15R, are independent intake passages 20F, 20R of almost the same intake channel length which connects the manifold proper 13a and the intake port 6 of each cylinder 4a - 4f.

Provided in the manifold proper 13a are a front side intake passage line for high speed 33F extending in car width direction, a front side intake passage line for low speed 34F, a rear side intake passage line 33R extending in a car width direction in almost parallel with the front side intake passage line for low speed 34F and at the position slightly lower than the front side intake passage line for high speed 33F and the rear side intake passage line 34R for low speed arranged along the upper surface of the rear side intake passage line 33R for high speed. So each collecting intake passage 21R, 21F is composed by an intake passage line for high speed and an intake passage line for low speed.

The front side and the rear side intake passage lines for high speed 33F, 33R correspond to the surge tank and have a comparatively large cross sectional area of passage. These passages are formed as comparatively large volume parts.

As will be described late, the downstream end portion of the front side intake passage line for high speed 33F and that of the rear side intake passage 16a of the U-shaped communicating pipe 16. These three intake passage lines 33F, 33R, 16a form a U-shape intake passage as a whole (refer to Fig.4). Provided in the communicating passage 16a is the communicating passage switchover valve 18 which is opened and shut according to the working condition of the engine 1.

The downstream end portion of the front side intake passage line for low speed 34F is connected by the front side intake passage line for high speed 33F from the side and the downstream end portion of the rear side intake passage for high speed 33R from the upside. While the upstream end portions of the front side and the rear side intake passage line for high speed 33F, 33R are open to the flange part 36, the upstream end portions of the front side and the rear side intake passage lines for low speed 34F, 34R are open to the flange part 36 through the medium of the common intake passage for low speed 35 (refer to Fig.4).

The upstream end portion of the front side independent intake passage 20F is connected to the side (on the front side) of the front side intake passage line for high speed 33F and thence extends substantially in a straight line as it gently descends but then curves downwardly and is connected to the intake part 6 of the corresponding cylinder of the front bank 1F. On the other hand, the upstream end portion of the rear side independent intake passage 20R is connected the side (on the front side) of the rear side intake passage line for high speed 33R and thence extends in the front direction as it is curving to form a convex shape and is connected to the corresponding intake port 6 of the rear side bank 1R. It is so designed that the front side independent intake passage 20F and the rear side independent intake passage 20R have the same intake channel length. However, since the rear side independent intake passage 20R is shorter than the front side independent intake passage 20F in the horizontal distance, it is required to set the radius of curvature at the bending part of the independent intake passage 20R smaller than that of the front side independent intake passage 20F for equalizing the intake channel lengths of both. Thus, intake resistance will become slightly larger.

A more detailed explanation will be made about the composition of each part of the intake system.

As shown in Fig.4, for the purpose of utilizing space above the engine 1 effectively, an air cleaner 37 for removing floating dust in intake air and an airflow meter 38 for detecting the quantity of intake air are provided for the common intake passage 32 which is formed rather in flange shape in vertical direction and is oblong in cross section. Planewise, this common intake passage 32 is arranged substantially in a straight line, from its upstream end portion to the downstream of the airflow meter 38, in the longitudinal direction of the vehicle, namely, in the direction of disposition of both banks 1F, 1R. The common intake passage 32 curves about 90° in left direction (as seen front the upside) at a bending part 32a which is slightly downstream the airflow meter 38 and then extends in axis direction of both intake passage lines for high speed 33F, 33R. The common intake passage 32 is partitioned into the front side branch intake passage 32F and the rear side branch intake passage 32R by a rib 39 at the part from the latter half of the bending part 32a to the downstream side. As toughness in vertical direction of the common intake passage 32 is enhanced by this rib 39 the common intake passage 32 has sufficient strength, although its thickness in vertical direction is comparatively small.

As intake air flowing in the common intake passage 32 turns about 90° when it passes through the bending part 32a, it flows more at the outer circumferential side of the bending part 32a due to its inertia and centrifugal force. Therefore, intake air which flows into the rear side branch intake passage 32R opened at the outer circumferential side of the bending part 32a is more than intake air which flows into the front side branch intake passage 32F opened at the inner circumferential side of the bending part 32a. Since the rear side independent intake passage 20R has a small radius of curvature at its bending part as stated before, it has larger intake resistance than the front side independent intake passage 20F and as a result, circulation of intake worsens. Since more intake air flows into the rear side branch intake passage 32R than the front side branch intake passage 32F as stated above, a decrease in the quantity of intake circulation in the rear side independent intake passage 20 R due to intake resistance is more up for. As a result, the quantity of intake air of the front side independent intake passage 20F and that of the rear side independent intake passage 20R is equalized. Thus, charging efficiencies at each cylinder 4a - 4f are equalized and output of the engine 1 can be improved.

The downstream end portions of the front side and the rear side branch intake passages 32F, 32R are connected to a flange part 36 of the manifold proper 13a through the medium of the throttle body 28. Provided in this throttle body 28 are a front side throttle valve 27F for adjusting the throttle quantity of intake air of the front side branch intake passage 32F and a rear side throttle valve 27R for adjusting the throttle quantity of intake air of the rear side branch intake passage 32R. By thus arranging the throttle valves 27F, 27R in lateral direction (two-valve system), the throttle body 28 is formed compact in vertical direction. These front side and rear side throttle valves 27F, 27R are fitted to the same valve axis 28a in the throttle body 28 and opened and shut simultaneously according to the working of an accelerator pedal through the medium of a link mechanism 40 having non-linear opening characteristic.

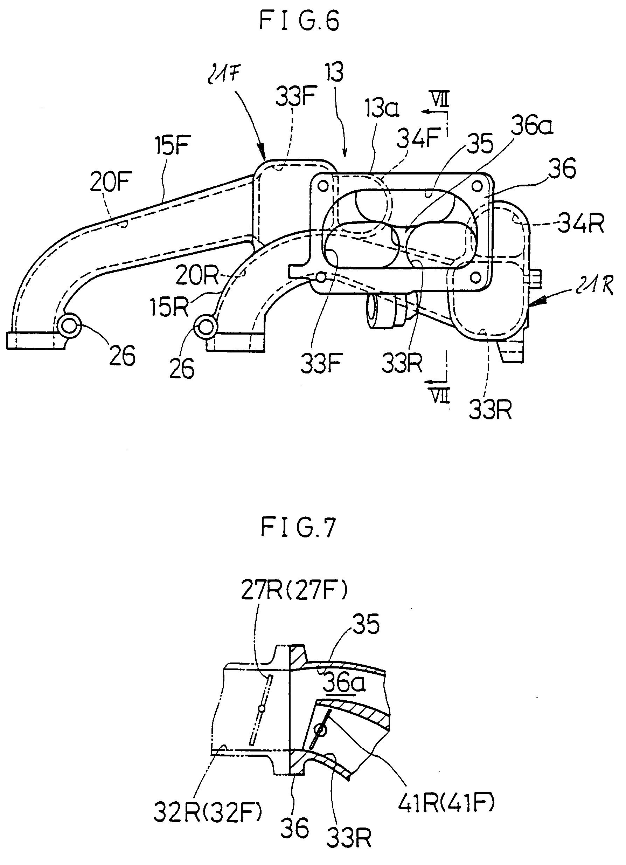

The front side intake passage 32F and the rear side intake passages 32R are again converged into a collecting part 36a in the flange part 36 of the manifold proper 13a (refer to Fig.7). This collecting part 36a is provided for forming a pressure reversing part of pressure wave when utilizing a resonance effect, by utilizing such phenomenon that the state of substantial equal pressure is obtained by interferring action between the intake pulsation of induction system on the side on the front side bank 1F and the intake pulsation of induction system on, the side of the rear side bank 1R. As will be described later, at the position immediately downstream the flange part 36 the induction system is branched into the front side intake passage line for high speed 33F, the rear side intake passage line for high speed 33R and the common intake passage for low speed 35. The upstream end portions and thereabouts of the front side and the rear side intake passage lines for high speed 33F, 33R are formed in flat shape or compact in vertical direction. The upstream end portions of the front side and the rear side intake passage lines for high speed 33F, 33R are opened adjacent to each other at a lower half of the flange part 36 having a rectangular cross section. The common intake passage for low speed 35 is opened at an upper half of the flange part 36, close to the front side and the rear side intake passage lines for high speed 33F, 33R (refer to Fig.5). Thus, the induction system around the flange part 36 is composed very compact with respect to the vertical direction and the lateral direction.

The front side and the rear side intake passage lines for high speed 33F, 33R and the common intake passage line for low speed 35 opened at the flange part 36 are, at the position near the flange part 36 (near the upstream end portion), arranged substantially midway between the front side intake passage line for high speed 33F and the rear side intake passage line for high speed 33R with respect to the lateral direction (in the direction of arranging both intake passage lines for high speed 33F, 33R) and also arranged substantially midway between the front side intake passage line for high speed 33F and the rear side intake passage line for high speed 33R with respect to the vertical direction. Therefore, at the position near the upstream end portion the front side intake passage line for high speed 33F and the rear side intake passage line for high speed 33R are formed symmetrically in the same shape. As a result, compactness of the take system around the flange part 36 is more ensured. Furthermore, intake resistance of the front side and the rear side intake passage lines for high speed 33F, 33R can be equalized and output of the engine 1 can be stabilized. Although the common intake passage for low speed 35 is branched, at the position slightly downstream the collecting part 36a, into the front side intake passage line for low speed 34F and the rear side intake passage line for low speed 34R, compactness and equalization of intake resistance can likewise be planned for the front side and the rear side intake passage lines for low speed 34F, 34R.

As compared with the passage cross sectional areas of the front side and the rear side intake passage lines for low speed 34F, 34R, those of the front side and the rear side intake passage lines for high speed are set large so that a large quantity of intake air can be supplied at the time of high speed. While the downstream end portion of the front side intake passage line for low speed 34F is connected, at the position slightly downstream the collecting part 36a, to the front side intake passage line for high speed 33F from the side, the downstream end portion of the rear side intake passage line for low speed 34R is connected to the rear side intake passage line for high speed 33R from the upper side. Therefore, at the time of low speed intake of the front side and the rear side intake passage flow low speed 34F, 34R once flows into the front side and the rear side intake passage line for high speed 33F, 33R respectively, where it is dispersed and is supplied to the corresponding cylinder from each independent intake passage 20F, 20R.

While each independent intake passage 20F of the first, the third and the fifth cylinders 4a, 4c, 4e belonging to the front side bank 1F is connected to the side (on the front side) of the side intake passage for high speed 23F, each independent intake passage 20R of the second, the fourth and the sixth cylinders 4b, 4d, 4f belonging to the rear side bank 1R is connected to the side (on the front side) of the rear side intake passage line for high speed 33R. As stated before, positional relation between the front side intake passage for high speed 33F and the rear side intake passage line for high speed 33R and the shape of each independent intake passage 20F, 20R are set in such a fashion that each independent intake passage 20F of the front side bank 1F and each independent intake passage 20R of the rear side bank 1R have the same intake channel length.

At the position immediately downstream the collecting part 36, the front side and the rear side intake passage lines for high speed 33F, 33R are provided with the front side and the rear side switchover valves 41F, 41R respectively for opening and shutting said passages. As will be explained later, these front side and the rear side switchover valves 41F, 41R are so designed that they are shut when r.p.m. is below the designated value in the engine rotation region for which a resonance effect should be utilized.

Fig.6 shows the intake manifold 13, as seen from the side of the flange part 36 toward the downstream side. Fig.7 is an explanatory drawings of the cross section, taken along the line VII-VII in Fig.6. As shown in Fig.6 and Fig.7, the front side intake passage line for high speed 33F and the rear side intake passage line for high speed 33R are branched and extended toward the downstream from a lower half of the flange part 36 (collecting part 36a). The common intake passage for low speed 35 is branched and extended toward the downstream from an upper half of the collecting part 36a.

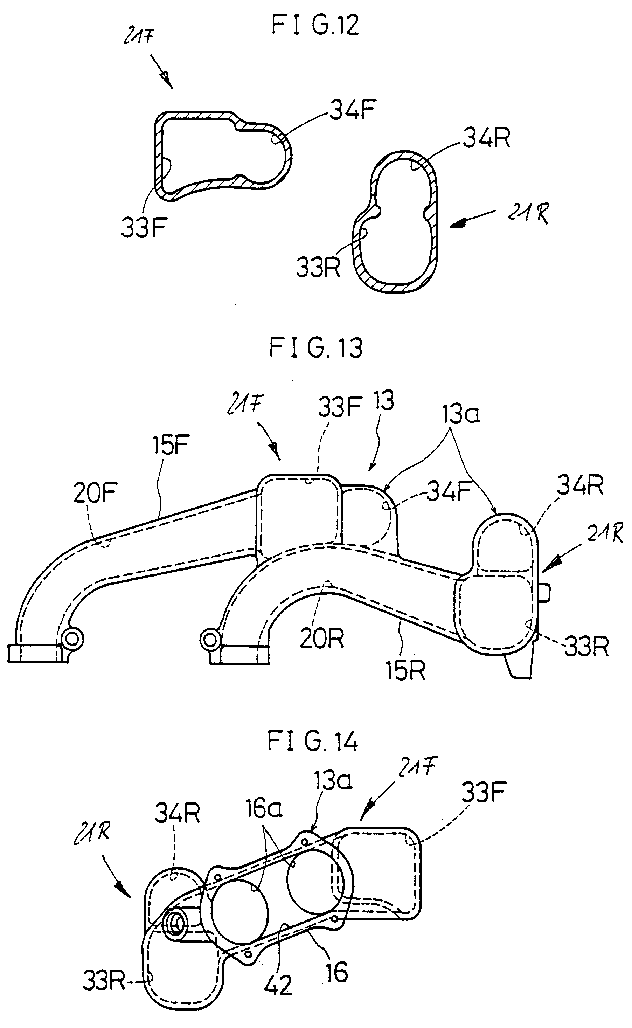

Referring back to Fig.4, at the downstream side from the flange part 36 the front side intake passage line for high speed 33F and the rear side intake passage line for high speed 33R extend toward the downstream as they gradually stretch right and left and at the downstream side from the position where they correspond to the first cylinder 4a and the second cylinder 4b, they extend in parallel with each other. As the part where they extend in parallel with each other (hereinafter referred to as a parallel part), the front side intake passage line for high speed 33F is arranged at the position slightly higher than the rear side intake passage line for high speed 33R (refer to Fig.11). At the downstream side from the branch part of the intake passage line for low speed (slightly downstream the collecting part 36a), the front side intake passage line for low speed 34F and the rear side intake passage line for low speed 34R extend toward the downstream as they gradually stretch in right and left direction and then at the parallel part the front side intake passage line for low speed 34F holds a plane side wall (on the rear side) of the front side intake passage line for high speed 33F in common and thus both passages are formed integrally.

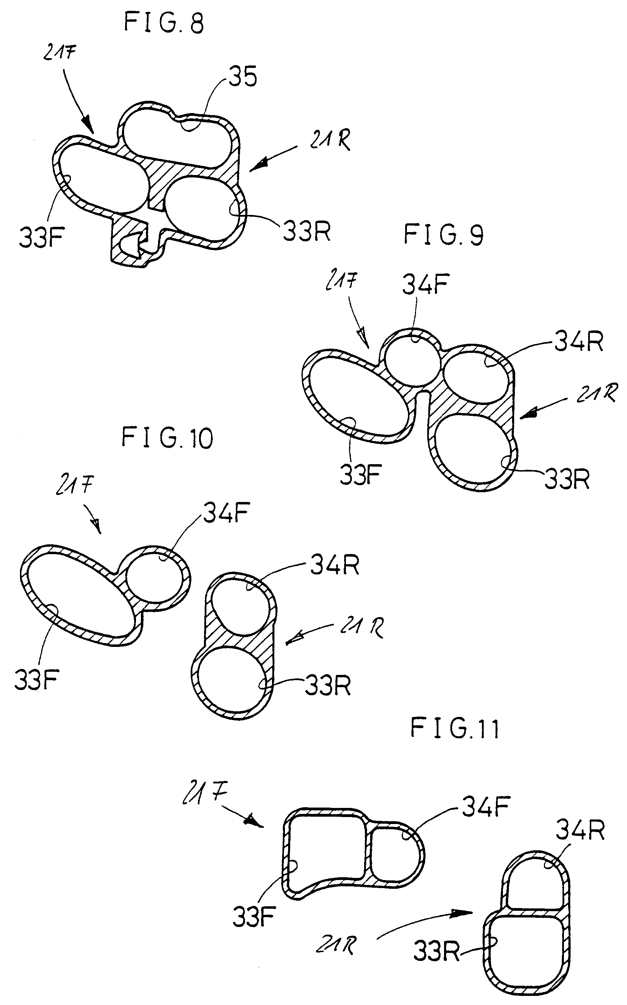

In order to show the positional relation between the front side and the rear side intake passage lines for high speed 33F, 33R and the front side and the rear side intake passage lines for low speed 34F, 34R and the cross sectional shapes of them, the coss section taken along the line VIII-VIII, the cross section taken along the line IX-IX, the cross section taken along the line X-X, the cross section taken along the line XI-XI, and the cross section taken along the line XII-XII in Fig.4 are shown in Fig.8, Fig.9, Fig.10, Fig.11 and Fig.12 respectively. Each intake passage line 33F, 33R, 34F, 34R is gradually divided into the front side and the rear side from the flange part 36 and arrives at the parallel part.

As shown in Fig.11, at the parallel part the passage cross sectional areas of the front side and the rear side intake passage lines for low speed 34F, 34R are fairly smaller than those of the front side and the rear side intake passage lines for high speed 33F, 33R. As will be described later, due to this difference the substantial intake channel lengths of the front side and the rear side intake passage lines for low speed 34F, 34R are longer than those of the front side and the rear side intake passage lines for high speed 33F, 33R. The cross sectional shape of the front side intake passage line for high speed 33F is so make that the length in width direction is smaller than that in vertical direction.

The front side intake passage line for high speed 33F is arranged at such a position that its undersurface is almost on the same level with the upper surface of the rear side intake passage line for high speed 33R. As stated before, while the front side intake passage line for low speed 34R is formed integrally with the front side intake passage line for high speed 33F by holding the rear side wall of the passage 33F in common, the rear side intake passage line for low speed 34R by holding the upper wall of the passage 33R in common. Thus, these passages are very compact in shape, with the reduced height. Since the front side intake passage line for low speed 34F and the rear side intake passage line for low speed 34R are arranged at the position of almost the same height, these passages which are made integrally can be manufactured easily.

As shown in Fig.13, as the front side intake passage line for high speed 33F holds the upper wall of the rear side independent intake passage 20R which extends from the rear side in common and is formed integrally with the passage 20R, composition of the induction system is made more compact and toughness of the induction system is enhanced.

Referring back to Fig.4, the downstream end portion of the front side intake passage line for high speed 33F and the downstream end portion of the rear side intake passage line for high speed 33R are connected to each other by the U-shaped communicating passage 16a. At the position near a joint with the rear side intake passage line for high speed 33R, the communicating passage 16a is provided with the communicating passage switchover valve 18. As will be explained later, this communicating passage switchover valve 18 is opened for forming a volume part (pressure reversing part) in the case where an inertia effect is utilized in the designated high rotation region.

As shown in Fig.14, an opening part 42 is formed at the bending part (bottom part of U-shape) of the downstream end portion and as shown in Fig.4, this opening part 42 is normally kept closed by a lid member 43 made of plastics. This opening part 42 is made in widely opened shape so that a valve body of the communicating passage switchover valve 18 can easily be inserted in or removed from it at the time of assembling, repairing, etc. or cleaning of the front side and the rear side intake passages for high speed 33F, 33R can be done from it.

An explanation is made below about the supercharging of pressure wave to carried out in the above composition, with reference to Fig.4.

At the designated high speed region for which an inertia effect should be utilized, the communicating passage switchover valve 18 and the front side and the rear side switchover valves 41F, 41R are all opened. At this time, front side and the rear side intake passage lines for high speed 33F, 33R communicate with each other through the medium of the communicating passage 16a and form integrally a volume part having a fairly large volume. This volume part acts as a reversing part of pressure wave. In each cylinder 4a - 4f, when the intake valve 8 is opened negative pressure waves generated at the intake port 6 are transmitted at a sonic speed through the independent intake passages 20F, 20R toward the upstream and are inverted into positive pressure waves at the volume part fromed by communication of the front side and the rear side intake passage lines for high speed 33F, 33R. These positive pressure waves are transmitted toward the downstream through the independent intake passages 20F, 20R and arrive at the intake port 6 immediately before the intake valve 8 is shut. By these positive pressure waves, intake is introduced into a combustion chamber and the charging efficiency is enhanced (inertia effect).

At the middle/low speed region for which a resonance effect should be utilized, the communicating passage switchover valve 18 is shut at the designated high speed but the front side and the rear side switchover valves 41F, 41R are opened. At this time, the front side intake passage line for high speed 33F and the rear side intake passage line for high speed 33R do not communicate with each other and therefore a volume part as in the case of utilizing an inertia effect is not formed. With regard to the first, the third and the fifth cylinders 4a, 4c, 4e belonging to the front side bank 1F, for example, negative pressure waves to be generated when the intake valve 8 is opened are transmitted up to the collecting part 36a through the medium of the independent intake passage 20F and the front side intake passage line for high speed 33F. At the collecting part 36, pressure waves generated from each cylinder 4a, 4c, 4e belonging to the front side bank 1F and pressure waves generated from each cylinder 4b, 4d, 4f belonging to the rear side bank 1R interfere with each other and thus the collecting part 36 acts as a pressure equalizing part. Such pressure equalizing part also acts as a pressure reversing part in the transmittance of pressure wave. Therefore, negative pressure waves generated at each cylinder 4a, 4c, 4e of the front side bank 1F and transmitted up to the collecting part 36a are inverted into positive pressure waves at the collecting part 36a and such positive pressure waves arrive at the intake port 6 of each cylinder 4a, 4c, 4e through the medium of the front side intake passage line for high speed 33F and the front side independent intake passage 20F. As such transmittance phenomenon of pressure waves is presented at each of the first, the third and the fifth cylinders 4a, 4c, 4e belonging to the front side bank 1F, in the intake passage line for high speed 33F pressure waves having amplitude larger than the vibration of pressure wave are generated. Then, immediately before the intake valve 8 is closed, at the cylinder to which resonance pressure waves have reached intake is introduced into a combustion chamber by the resonance pressure waves and charging efficiency is enhanced (resonance effect). In this case, the front side intake passage line for low speed 34F also communicates each intake port 6 with the collecting part 36a but since the front side intake passage line for low speed 34F is fairly smaller in inside diameter than the front side intake passage line for high speed 33F, so long as the transmittance of pressure waves is concerned, only the front side intake passage line for high speed 33F is effective and the front side intake passage line for low speed 34F does not produce substantially any effect. As to each cylinder 4b, 4d, 4f belonging to the rear side bank 1R, supercharging of pressure waves by a resonance effect is carried out similarly.

In the middle/low speed region for which a resonance effect should be utilized, at the time of the designated low speed the communicating passage switchover valves 41F, 41R are all shut. At this time, since the front side and the rear side intake passage lines for high speed 33F, 33R are closed at the upstream side, regarding each cylinder 4a, 4c, 4e of the front side bank 1F, for example, pressure waves are transmitted reciprocatively between the intake port 6 of each cylinder 4a, 4c, 4e and the intake passage branch part for low speed via the front side independent intake passage 20F, the front side intake passage line for high speed 33F and the front side intake passage line for low speed 34F. In this case, due to intake interference between the front side cylinders 4a, 4c, 4e and the rear side cylinders 4b, 4d, 4f, the intake passage branching part for low speed becomes the pressure equalizing part, namely, the pressure reversing part. Thus, transmittance channel of pressure waves becomes longer. Moreover, since the front side intake passage line for low speed 34F is smaller in inside diameter than the front side intake passage line for high speed 33F, equivalent pipe length regarding transmittance of pressure waves is made long and accordingly time required for reciprocative transmittance of pressure waves is longer and the resonance effect can be enhanced effectively at the time of comparatively low speed. Also, improvement of charging efficiency can be contemplated.

According to this embodiment, it is possible to enhance an inertia effect and a resonance effect, to equalize charging efficiencies of each cylinder and to plan the improvement of engine output.

According to the present invention, for an intake system of a V-type engine adapted for carrying out supercharging by utilizing an inertia effect and a resonance effect of intake air it is possible to enhance divisibility of intake air to cylinders of both banks, to keep the charging efficiency uniform and to reduce the height of the intake system and make the intake system compact. Therefore, even if the bonnet of the vehicle is low, arrangement of the intake system can be done without interference with the bonnet or the bonnet can be designed in the reduced height. Thus, the present invention can contribute effectively to the lighter weight of a vehicle, improvement of aero characteristic of the vehicle body, etc.

From the above, it can be said that the present invention has high possibility of industrial utilization, especially in the point that the shape of the intake system can be adapted to correspond to the front ward inclination of the bonnet.

## Claims

1. An intake system for a V-type engine having plural cylinders (4a-4f) grouped into first and second banks, firing taking place alternately in each cylinder group,
a first collecting intake passage (21R) connected to the cylinders (4b, 4d, 4f) of the first bank (1R) through the medium of a first group of independent intake passages (20R) passing between both banks, and
a second collecting intake passage (21F) connects to the cylinders (4a, 4c, 4e) of the second bank (1F) through the medium of a second group of independent intake passages (20F),
the length of each independent intake passage (20F, 20R) being set equal to that of each other,
each independent intake passage (20F, (20R) extending upwardly from the cylinder and then further extending toward each collecting intake passage (21F, 21R),
the first collecting intake passage (21R) being arranged above the first bank of cylinders (1R) and communicating with the cylinders of the first bank through the first group of independent intake passages
characterized in that
the second collecting intake passage (21F) is located above the first group of independent intake passages (20R) and communicates with the cylinders of the second bank (1F) through the second group of independent intake passages (20F) passing above the space between the first and second banks.

2. An intake system for a V-type engine as defined in claim 1, in which a pair of banks (1F, 1R) are opposite to each other in a longitudinal direction of the vehicle body and the first bank (1R) above which the first collecting intake passage (21R) is arranged is located at the rear side of the longitudinal direction of the vehicle body.

3. An intake system for a V-type engine as defined in claim 2, in which the independent intake pipes (15) which form the group at independent intake passages communicating with the frist collecting intake passage (21R) are formed integrally with an intake collecting part forming the second collecting intake passage (21F) with a common partition wall (22) therebetween.

4. An intake system for a V-type engine as defined in claim 2, in which both banks (1F, 1R) are shifted in location with respect to each other in the direction of car width and the first collecting intake passage (21R) is shifted with respect to the second collecting intake passage (21F) in the same direction as the direction in which the second bank (1F) is shifted in location with respect to the first bank (1R).

5. An intake system for a V-type engine as defined in claim 2, in which the first group of independent intake (20R) passages extend at a right angle to the direction alone both banks (1F, 1R) from the first collecting intake passage (21R) and then bend at an intermediate part thereof in the same direction as the direction in which the first bank (1R) is shifted with respect to the second bank (1F).

6. An intake system for a V-type engine as defined in claim 2, in which the second group of independent intake passage (20F) extend from the second collecting intake passage (21F), at a right angle to the direction along both banks (1F, 1R) and then bend at an intermediate part thereof in the same direction as the direction in which the second bank (1F) is shifted in location with respect to the first bank (1R).

7. An intake system for a V-type engine as defined in claim 2, in which cylinder heads (3F, 3R) of both banks (1F, 1R) are connected integrally by spacers (9).

8. An intake system for a V-type engine as defined in claim 7, in which the upper surfaces of the spacers (9) are made in plane.

9. An intake system for a V-type engine as defined in claim 2, in which an exhaust recirculating passage (25) which returns a part of exhaust gas of the engine to the intake system and a blow-by gas passage (26) which feeds blow-by gas in a crank room of the engine to the intake system are formed at spacers between the cylinder banks and the downstream ends of these passages are opened to the independent intake passages.

10. An intake system for a V-type engine as defined in claim 2, in which an exhaust recirculating passage (25) which returns a part of exhaust gas of the engine to an intake system and a blow-by gas passage (26) which feeds blow-by gas in a crank case of the engine to the intake system are formed at spacers between the cylinder banks and said blow-by gas passage (26) is arranged at the underside of the exhaust recirculating passage (25) in the spacer.

11. An intake system for a V-Type engine as defined in claim 2, in which a signal fuel distribution pipe (24) which feeds fuel to cylinders of both banks (1F, 1R) by jetting is arranged between both banks (1F, 1R).

12. An intake system for a V-type engine as defined in claim 2, in which an injector (23) which feeds fuel by jetting is provided at an independent intake passage (20) of each cylinder (4) and each injector (23) is arranged between both banks (1F, 1R) at the underside of an independent intake pipe (15) which forms an independent intake passage.

13. An intake system for a V-type engine as defined in claim 2, in which an intake port (6) of each cylinder (4) bends upwardly as it parts from the cylinder and an injector (23) which feeds fuel by jetting to an independent intake passage (20) of each cylinder (4) is arranged on an extension line of a cylinder side portion of the intake port (6).

14. An intake system for a V-type engine as defined in claim 6, in which the first group of independent intake passages (20R) corresponding to the first bank (1R) extends in linear state when viewed from above.

15. An intake system for a V-type engine as defined in claim 2, in which each collecting intake passage (21F, 21R) consists of an intake passage line (33F, 33R) for high speed and an intake passage line (34F, 34R) for low speed, the intake passage line (34 F, 34R) for low speed being connected at its downstream end portion to the downstream end portion of the intake passage line (33F, 33R) for high speed and the intake passage line (34F, 34R) for low speed and the intake passage line (33F, 33R) for high speed are formed integrally and connected to each other at their upstream end portions, the substantial intake channel length of said intake passage line (33R, 33R) for high speed being set comparatively shorter than that of said intake passage line (34F, 34R) for low speed for the sake of pressure wave transmission.

16. An intake system for a V-type engine as defined in claim 2, in which each collecting intake passage (21F, 21R) is provided with an intake passage line for high speed (33F, 33R) whose substantial intake channel length is set comparatively short and an intake passage line (34F, 34R) for low speed whose substantial intake length is set comparatively longer than said intake passage line for high speed, each intake passage line for high speed (33F, 33R) and each intake passage line (34F, 34R) for low speed of both banks (1F, 1R) all being arranged above the first bank (1R) in such a fashion that the positions in vertical direction of each intake passage line for high speed are different from each other and while the intake passage line for low speed connected to the intake passage line for high speed on the side of low position arrangement is arranged at the upper side of said intake passage line for high speed, the intake passage line for low speed connected to the intake passage line for high speed on the side of high position arrangement is arranged at the side of said intake passage line for high speed.

17. An intake system for a V-type engine as defined in claim 16, in which a collecting part (36) which collects upstream ends of both collecting intake passages (21F, 21R) is provided at one side of the first bank (1R) and the upstream ends of intake passage lines (34F, 34R) for low speed at each bank communicate with the collecting part at the downstream side of the upstream end of the intake passage line (33F, 33R) for high speed.

18. An intake system for V-type engine as defined in Claim 16, in which a collecting part (36) which collects upstream ends of both collecting intake passages (21F, 21R) is provided at one side of the first bank (1R) and a communicating port of upstream ends of intake passage (34F, 34R) for low speed at each bank with the collecting part is arranged at an upper side than a communicating port of the upstream end of the intake passage (33F, 33R) for high speed with the collecting part.

19. An intake system V-type engine as defined in claim 16, in which a collecting part (36) which collects upstream ends of both collecting intake passages (21F, 21R) is provided at one side of the first bank (1R) and a communicating passage (16a) which makes downstream ends of both collecting passages communicate with each other is provided at the other side, a throttle valve (27) which throttles the intake passage and a communicating passage switchover valve (18) which opens and shuts the communicating passage are provided at a common intake passage at the upstream side of the collecting part, a switchover valve (18) for the intake passage line (33F, 33R) for high speed which opens and shuts the intake passage line for high speed is provided at the upstream end of the intake passage line for high speed at each bank, said two switchover valves are opened at the high relation region of the engine but at the medium rotation region of the communicating passage switchover valve is closed and the intake passage switchover valve for high speed is opened and at the low rotation region both switchover valves are closed.

20. An intake system for V-type engine as defined in claim 2, in which the upstream ends of both collecting intake passages (21F, 21R) are connected to the common intake passage which introduces intake air into said intake passage and said common intake passage is formed in such a fashion that it gradually faces the front side of the vehicle that it gradually faces the upstream side from a connecting part with the collecting intake passage.

## Patentansprüche

1. Einlaßsystem für einen Motor vom V-Typ mit mehreren Zylindern (4a bis 4f), die in eine erste und eine zweite Reihe gruppiert sind, wobei die Zündung alternativ in jeder Zylindergruppe stattfindet,
mit einer ersten Sammeleinlaßpassage (21R), die an die Zylinder (4b, 4d, 4f) der ersten Reihe (1R) über eine erste Gruppe unabhängiger Einlaßpassagen (20R), die zwischen beiden Reihen verlaufen, angeschlossen ist, und
einer zweiten Sammeleinlaßpassage (21F), die an die Zylinder (4a 4c, 4e) der zweiten Reihe (1F) über eine zweite Gruppe unabhängiger Einlaßpassagen (20F) angeschlossen ist,
wobei die Länge einer jeden unabhängigen Einlaßpassage (20F, 20R) gleich derjenigen der anderen ist,
und jede unabhängige Einlaßpassage (20F, 20R) sich nach oben von dem Zylinder erstreckt und dann weiter in Richtung auf die Sammeleinlaßpassage (21F, 21R) verläuft,
und die erste Sammeleinlaßpassage (21R) oberhalb der ersten Reihe der Zylinder (1R) angeordnet ist und mit den Zylindern derersten Reihe über eine erste Gruppe unabhängiger Einlaßpassagen in Verbindung steht,
dadurch gekennzeichnet, daß
die zweite Sammeleinlaßpassage (21F) sich oberhalb der ersten Gruppe unabhängiger Einlaßpassagen (20R) befindet und mit den Zylindern der zweiten Reihe (1F) über die zweite Gruppe unabhängiger Einlaßpassagen (20F) in Verbindung steht, die oberhalb des Raumes zwischen der ersten und der zweiten Reihe verlaufen.

2. Einlaßsystem für einen Motor vom V-Tap gemäß Anspruch 1, bei welchem ein Paar von Reihen (1F,1R) einander in Längsrichtung der Fahrzeugkarosserie gegenüber liegen und die erste Reihe (1R), oberhalb welcher sich die erste Sammeleinlaßpassage (21R) befindet, auf der rückwärtigen Seite der Längsrichtung der Fahrzeugkarosserie angeordnet ist.

3. Einlaßsystem für einen Motor vom V-Typ gemäß Anspruch 2, bei welchem die unabhängigen Einlaßrohre (15), die die Gruppe bei den unabhängigen Einlaßpassagen bilden, welche mit der ersten Sammeleinlaßpassage (21R) in Verbindung stehen, materialeinheitlich ausgebildet sind mit einem Einlaßsammelteil, der die zweite Sammeleinlaßpassage (21F) bildet, mit einer gemeinsamen Unterteilungswand (22) hierzwischen.

4. Einlaßsystem für einen Motor vom V-Typ gemäß Anspruch 2, bei welchem beide Reihen (1F, 1R) verschoben sind in Beziehung zueinander in Richtung der Fahrzeugbreite, und die erste Sammeleinlaßpassage (21R) verschoben ist im Hinblick auf die zweite Sammeleinlaßpassage (21F) in der gleichen Richtung wie die Richtung, in welcher die zweite Reihe (1F) verschoben ist im Hinblick auf die erste Reihe (1R).

5. Einlaßsystem für einen Motor vom V-Typ gemäß Anspruch 2, bei welchem sich die erste Gruppe unabhängiger Einlaßpassagen (20R) in einem rechten Winkel zur Richtung entlang beider Reihen (1F, 1R) erstreckt von der ersten Sammeleinlaßpassage (21R), und dann in einem mittleren Teil in der gleichen Richtung gebogen ist wie die Richtung, in welcher die erste Reihe (1R) verschoben ist im Hinblick auf die zweite Reihe (1F).

6. Einlaßsystem für einen Motor vom V-Typ gemäß Anspruch 2, bei welchem die zweite Gruppe unabhäniger Einlaßpassagen (20F) sich von der zweiten Sammeleinlaßpassage (21F) in einem rechten Winkel erstreckt zur Richtung entlang beider Reihen (1F, 1R), und dann in einem mittleren Teil in der gleichen Richtung gebogen ist wie die Richtung, in welcher die zweite Reihe (1F) verschoben ist in Bezug auf die erste Reihe (1R).

7. Einlaßsystem für einen Motor vom V-Typ gemäß Anspruch 2, bei welchem die Zylinderköpfe (3F 3R) beider Reihen (1F, 1R) materialeinheitlich durch Abstandselemente (9) miteinander verbunden sind.

8. Einlaßsystem für einen Motor vom V-Typ gemäß Anspruch 7, bei welchem die oberen Oberflächen der Abstandselemente (9) eben ausgebildet sind.

9. Einlaßsystem für einen Motor vom V-Typ gemäß Anspruch 2, bei welchem eine Abgasrückführungspassage (25), die einen Teil des Abgases des Motors zum Einlaßsystem zurückführt, sowie eine Durchblasgaspassage (26), die Durchblasgas im Kurbelgehäuse des Motors zum Einlaßsystem führt, an den Abstandselementen zwischen den Zylinderreihen ausgebildet sind, wobei die stromabwärtigen Enden dieser Passagen offen zu den unabhängigen Einlaßpassagen sind.

10. Einlaßsystem für einen Motor vom V-Typ gemäß Anspruch 2, bei welchem eine Abgasrückführungspassage (25), die einen Teil des Abgases des Motors zum Einlaßsystem zurückführt und eine Durchblasgaspassage (26), die Durchblasgas in dem Kurbelgehäuse des Motors zum Einlaßsystem führt, an den Abstandselementen zwischen den Zylinderreihen ausgebildet sind, und die Durchblasgaspassage (26) auf der Unterseite der Abgasrückführpassage (25) innerhalb des Abstandselementes angeordnet ist.

11. Einlaßsystem für einen Motor vom V-Typ gemäß Anspruch 2, bei welchem ein Signalbrennstoffverteilrohr (24), welches Brennstoff zu den Zylindern beider Reihen (1F, 1R) durch Einspritzen führt, zwischen beiden Reihen 1F, 1R angeordnet ist.

12. Einlaßsystem für einen Motor vom V-Typ gemäß Anspruch 2, bei welchem ein Injektor (23), der Brennstoff durch Einspritzen beschickt, an einer unabhängigen Einlaßpassage (20) eines jeden Zylinders (4) vorgesehen ist, wobei jeder Injektor (23) zwischen beiden Reihen (1F, 1r) an der Unterseite eines unabhängigen Einlaßrohres (15), welches eine unabhängige Einlaßpassage bildet, angeordnet ist.

13. Einlaßsystem für einen Motor vom V-Typ gemäß Anspruch 2, bei welchem eine Einlaßöffnung (6) eines jeden Zylinders (4) nach oben abbiegt, wenn sie sich vom Zylinder trennt, und ein Injektor (23), der Brennstoff durch Einspritzen in eine unabhängige Einlaßpassage (20) eines jeden Zylinders (4) beschickt, auf einer Verlängerungslinie eines Zylinderseitenteils der Einlaßöffnung (6) angeordnet ist.

14. Einlaßsystem für einen Motor vom V-Typ gemäß Anspruch 6, bei welchem eine erste Gruppe unabhängiger Einlaßpassagen (20R), die der ersten Reihe (1R) entsprechen, sich von oben gesehen linear erstreckt.

15. Einlaßsystem für einen Motor vom V-Typ nach Anspruch 2, in welchem jede Sammeleinlaßpassage (21F, 21R) aus einer Einlaßpassagenleitung (33F, 33R) für hohe Geschwindigkeit und eine Einlaßpassagenleitung (34F, 34R) für niedrige Geschwindigkeit besteht, wobei die unabhängige Passagenleitung (34F, 34R) für niedrige Geschwindigkeit an ihrem stromabwärtigen Endbereich mit dem stromabwärtigen Endbereich der Einlaßpassagenleitung (33F, 33R) für hohe Geschwindigkeit angeschlossen ist, und die Einlaßpassagenleitung (34F, 34R) für niedrige Geschwindigkeit und die Einlaßpassagenleitung (33F, 33R) für hohe Geschwindigkeit materialeinheitlich ausgebildet sind und miteinander an ihren stromaufwärtigen Endbereichen miteinander verbunden sind, wobei die wesentliche Einlaßkanallänge der Einlaßpassagenleitung (33F, 33R) für hohe Geschwindigkeit vergleichsweise kürzer eingestellt ist als diejenige der Einlaßpassagenleitung (34F, 34R) für niedrige Geschwindigkeit zur Druckwellenübertragung.

16. Einlaßsystem für einen Motor vom V-Typ gemäß Anspruch 2, bei welchem jede Sammeleinlaßpassage (21F, 21R) mit einer Einlaßpassagenleitung für hohe Geschwindigkeit (33F, 33R) versehen ist, deren wesentliche Einlaßkanallänge vergleichsweise kurz eingestellt ist, sowie eine Einlaßpassagenleitung (34F, 34R) für niedrige Geschwindigkeit, deren wesentliche Einlaßlänge vergleichsweise länger eingestellt ist, als die Einlaßpassagenleitung für hohe Geschwindigkeit, wobei jede Einlaßpassagenleitung für hohe Geschwindigkeit (33F, 33R) und jede Einlaßpassagenleitung (34F, 34R) für niedrige Geschwindigkeit beider Reihen (1F, 1R) oberhalb der ersten Reihe (1R) in einer solchen Weise angeordnet sind, daß die Positionen in Vertikalrichtung einer jeden Einlaßpassagenleitung für hohe Geschwindigkeit sich voneinander unterscheiden, und während die Einlaßpassagenleitung für niedrige Geschwindigkeit an die Einlaßpassagenleitung für hohe Geschwindigkeit auf der Seite einer niedrigen Position angeordnet ist auf der Oberseite der Einlaßpassagenleitung für hohe Geschwindigkeit, während die Einlaßpassagenleitung für niedrige Geschwindigkeit an die Einlaßpassagenleitung für hohe Geschwindigkeit auf der Seite einer hohen Position angeordnet ist an der Seite der Einlaßpassagenleitung für hohe Geschwindigkeit.

17. Einlaßsystem für einen Motor vom V-Typ gemäß Anspruch 16, bei welchem ein Sammelteil (36), der die stromaufwärtigen Enden beider Sammeleinlaßpassagen (21F, 21R) zusammenführt, auf einer Seite der ersten Reihe (1R ) vorgesehen ist, und die stromaufwärtigen Enden der Einlaßpassagenleitungen (34F, 34R)für niedrige Geschwindigkeit einer jeden Reihe mit dem Sammelteil auf der stromabwärtigen Seite des stromaufwärtigen Endes der Einlaßpassagenleitung (33F, 33R) für hohe Geschwindigkeit angeschlossen sind.

18. Einlaßsystem für einen Motor vom V-Typ gemäß Anspruch 16, bei welchem ein Sammelteil (36), der die stromaufwärtigen Enden beider Sammeleinlaßpassagen (21F, 21R) zusammenführt, auf einer Seite der ersten Reihe (1R) angeordnet ist, und eine Verbindungsöffnung der stromaufwärtigen Enden der Einlaßpassage (34F, 34R) für niedrige Geschwindigkeit an jeder Reihe mit dem Sammelteil an einer höheren Seite angeordnet ist, als eine Verbindungsöffnung des stromaufwärtigen Endes der Einlaßpassage (33F, 33R) für hohe Geschwindigkeit mit dem Sammelteil.

19. Einlaßsystem für einen Motor vom V-Typ gemäß Anspruch 16, bei welchem ein Sammelteil (36), der die stromaufwärtigen Enden der beiden Sammeleinlaßpassagen (21F, 21R) zusammenführt, auf einer Seite der ersten Reihe (1R) angeordnet ist, und eine Verbindungspassage (16a), die die stromabwärtigen Enden beider Sammelpassagen miteinander zusammenführt, auf der andern Seite vorgesehen ist, während eine Drosselklappe (27), die die Einlaßpassage drosselt, und eine Verbindungspassagenumschaltklappe (18), die die Verbindungspassage öffnet und schließt, an einer gemeinsamen Einlaßpassage auf der stromafuwärtigen Seite des Verbindungsteiles vorgesehen sind, während eine Umschaltklappe (18) für die Einlaßpassagenleitung (33F, 33R) für hohe Geschwindigkeit, die die Einlaßpassagenleitung für hohe Geschwindigkeit öffnet und schließt, am stromaufwärtigen Ende der Einlaßpassagenleitung für hohe Geschwindigkeit an jeder Reihe vorgesehen ist, wobei die beiden Umschaltklappen im hohen Drehbereich des Motors geöffnet sind, jedoch bei einem mittleren Rotationsbereich die Verbindungspassagenumschaltklappe geschlossen ist, und die Einlaßpassagenumschaltklappe für hohe Geschwindigkeit geöffnet ist, während beim Niedrigdrehbereich beide Umschaltklappen geschlossen sind.

20. Einlaßsystem für einen Motor vom V-Typ gemäß Anspruch 2, bei welchem die stromaufwärtigen Enden beider Sammeleinlaßpassagen (21F, 21R) an die gemeinsame Einlaßpassage angeschlossen sind, die Einlaßluft in die Einlaßpassage führt, und die gemeinsame Einlaßpassage in einer solchen Weise ausgebildet ist, daß sie sich allmählich der Vorderseite des Fahrzeuges zuwendet und daß sie sich allmählich der stromaufwärtigen Seite von dem Verbindungsteil mit der Sammeleinlaßpassage zuwendet.

## Revendications

1. Un système d'admission pour un moteur du type en V, présentant une pluralité de cylindres (4a à 4f) groupés en une première et une seconde rangées, l' allumage étant réalisé alternativement dans chaque groupe de cylindres,
un premier passage de collecteur d'admission (21R) relié aux cylindres (4b, 4b, 4f) de la première rangée (1R), par l'intermédiaire d'un premier groupe (20R) de passages d'admission indépendants passant entre les deux rangées, et
un deuxième passage de collecteur d'admission (21F) relié aux cylindres (4a, 4c, 4e) de la seconde rangée (1F), par l'intermédiaire d'un second groupe (20F) de passages d'admission indépendants,
les longueurs de chacun des passages d'admission indépendants (20F, 20R) étant égales,
chaque passage d'admission indépendant (20F, 20R) s'étendant vers le haut depuis le cylindre et s'étendant en outre ensuite vers chaque passage de collecteur d'admission (21F, 21R),
le premier passage de collecteur d'admission (21R) étant disposé au-dessus de la première rangée de cylindres (1R) et communiquant avec les cylindres de la première rangée par l'intermédiaire du premier groupe de passages d'admission indépendants,
caractérisé en ce que,
le second passage de collecteur d'admission (21F) est situé au-dessus du premier groupe de passages d'admission indépendants (20R) et communique avec les cylindres de la seconde rangée (1F) par l'intermédiaire du second groupe de passages d'admission indépendants (20F) passant au-dessus de l'espace entre les première et seconde rangées.

2. Un système d'admission pour un moteur du type en V selon la revendication 1, dans lequel un couple de rangées (1F, 1R) sont disposées de façon opposée l'une à l'autre dans la direction longitudinale de la caisse du véhicule et la première rangée (1R) au-dessus de laquelle est disposé le premier passage de collecteur d'admission (21R), est disposée du côté arrière de la direction longitudinale de la caisse du véhicule.

3. Un système d'admission pour un moteur du type en V selon la revendication 2, dans lequel les tubulures d'admission (15) indépendantes , qui forment le groupe sur des passages d'admission indépendants communiquant avec le premier passage de collecteur d'admission (21R) sont formées monobloc tenant avec une partie de collecteur d'admission constituant le second passage de collecteur d'admission (21F), avec une paroi de séparation (22) commune (22) disposée entre eux.

4. Un système d'admission pour un moteur du type en V selon la revendication 2, dans lequel les emplacements des deux rangées (1F, 1R) sont décalés l'un par rapport à l'autre dans le sens de la largeur du véhicule et le premier passage de collecteur d'admission (21R) est décalé par rapport au second passage de collecteur d'admission (21F) dans la même direction que la direction dans laquelle la seconde rangée (1F) est décalée par rapport à la première rangée (1R).

5. Un système d'admission pour un moteur du type en V selon la revendication 2, dans lequel le premier groupe de passages d'admission indépendants (20R) s'étend perpendiculairement à la direction dans laquelle s'étendent les deux rangées (1F, 1R) depuis le premier passage de collecteur d'admission (21R) et s'incurve ensuite sur sa partie intermédiaire dans la même direction que la direction dans laquelle la première rangée (1R) est décalée par rapport à la seconde rangée (1F).

6. Un système d'admission pour un moteur du type en V selon la revendication 2, dans lequel le deuxième groupe de passages d'admission (20F) indépendants s'étend depuis le deuxième passage de collecteur d'admission (21F), perpendiculairement à la direction dans laquelle s'étendent les deux rangées (1F, 1R) et s'incurve ensuite au niveau de sa partie intermédiaire, dans la même direction que la direction dans laquelle la seconde rangée (1F) est décalée par rapport à la première rangée (1R).

7. Un système d'admission pour un moteur du type en V selon la revendication 2, dans lequel des culasses (3F, 3R) des deux rangées (1F, 1R) sont reliées d'un seul tenant par des éléments d'espacement ou entretoises (9).

8. Un système d'admission pour un moteur du type en V selon la revendication 7, dans lequel les surfaces supérieures des éléments d'espacement (9) sont planes.

9. Un système d'admission pour un moteur du type en V selon la revendication 2, dans lequel un passage de recirculation d'échappement (25) qui renvoie une partie des gaz d'échappement du moteur au Un système d'admission et un passage de gaz de balayage (26), qui amène des gaz de balayage dans un carter de vilebrequin du moteur vers le Un système d'admission, sont formés dans les éléments d'espacement entre les rangées de cylindre et les extrémités aval de ces passages débouchent dans les passages d'admission indépendants.

10. Un système d'admission pour un moteur du type en V selon la revendication 2, dans lequel un passage de recirculation d'échappement (25), qui renvoie une partie des gaz d'échappement du moteur à un système d'admission, et un passage de gaz de balayage (26) qui amène le gaz de balayage dans un carter de vilebrequin du moteur au système d'admission sont formés dans les éléments d'espacement entre les rangées de cylindres et dans lequel ledit passage de gaz de balayage (26) est agencé à la face inférieure du passage de recirculation d'échappement (25), dans l'élément d'espacement.

11. Un système d'admission pour un moteur du type en V selon la revendication 2, dans lequel un tube de distribution de carburant (24) qui alimente en carburant les cylindres des deux rangées (1F, 1R), est disposé entre les deux rangées (1F, 1R).

12. Un système d'admission pour un moteur du type en V selon la revendication 2, dans lequel un injecteur (23) qui alimente en carburant par injection, est prévu sur un passage d'admission indépendant (20) de chaque cylindre (4) et chaque injecteur (23) est disposé entre les deux rangées (1F, 1R), sur la face inférieure d'une tubulure d'admission indépendante (15) qui forme un passage d'admission indépendant.

13. Un système d'admission pour un moteur du type en V selon la revendication 2, dans lequel un orifice d'admission (6) de chaque cylindre (4) s'incurve vers le haut, lorsqu'il se sépare du cylindre et un injecteur (23) qui alimente en carburant par injection dans un passage d'admission indépendant (20) de chaque cylindre (4), est disposé sur une ligne de prolongement d'une partie latérale de cylindre de l'orifice d'admission (6).

14. Un système d'admission pour un moteur du type en V selon la revendication 6, dans lequel le premier groupe de passages d'admission indépendants (20R) correspondant à la première rangée (1R) s'étend de façon rectiligne, en vue de dessus.

15. Un système d'admission pour un moteur du type en V selon la revendication 2, dans lequel chaque passage de collecteur d'admission (21F, 21R) consiste en une conduite de passage d'admission (33F, 33R) pour un écoulement à vitesse élevée et à une conduite de passage d'admission (34F, 34R) pour un écoulement à vitesse réduite, la conduite de passage d'admission (34F, 34R) pour l'écoulement à vitesse réduite étant reliée par sa partie d'extrémité aval à la partie d'extrémité aval de la conduite de passage d'admission (33F, 33R) pour l'écoulement à vitesse élevée et dans lequel la conduite de passage d'admission (34F, 34R) pour l'écoulement à vitesse réduite et la conduite de passage d'admission (33F, 33R) pour l'écoulement à vitesse élevée sont formées d'un seul tenant et reliées l'une à l'autre par leurs parties d'extrémité amont, la longueur effective du canal d'admission de ladite conduite de passage d'admission (33R, 33F) pour un écoulement à vitesse élevée étant comparativement inférieure à celle de ladite conduite de passage d'admission (34F, 34R) pour l'écoulement à vitesse réduite, afin de permettre la transmission des ondes de pression.

16. Un système d'admission pour un moteur du type en V selon la revendication 2, dans lequel chaque passage de collecteur d'admission (21F, 21R) est pourvu d'une conduite de passage d'admission (33F, 33R) pour un écoulement à vitesse élevée et dont la longueur effective de canal d'admission est comparativement courte et d'une conduite de passage d'admission (34F, 34R) pour un écoulement à vitesse réduite et dont la longueur effective de canal d'admission est comparativement supérieure à celle de ladite conduite de passage d'admission (33F, 33R) pour un écoulement à une vitesse élevée, chaque conduite de passage d'admission (33F, 33R) pour un écoulement à vitesse élevée, et chaque conduite de passage d'admission (34F, 34R) pour un écoulement à vitesse réduite des deux rangées (1F, 1R) étant située au-dessus de la première rangée (1R), de telle manière que les positions, dans la direction verticale, de chaque conduite de passage d'admission pour un écoulement à vitesse élevée, soient différentes l'un de l'autre et, tandis que la conduite de passage d'admission pour un écoulement à vitesse réduite, reliée à la conduite de passage d'admission pour un écoulement à vitesse élevée, du côté de l'agencement en position basse est disposée du côté supérieur de ladite conduite de passage d'admission pour un écoulement à vitesse élevée la conduite de passage d'admission pour un écoulement à vitesse réduite reliée à la conduite de passage d'admission pour un écoulement à vitesse élevée du côté de l'agencement en position haute, soit disposée du côté de ladite conduite de passage d'admission pour un écoulement à vitesse élevée.

17. Un système d'admission pour un moteur du type en V selon la revendication 16, dans lequel une partie de collecteur (36) qui relie les extrémités amont des deux passages de collecteur d'admission (21F, 21R) est prévue d'un côté de la première rangée (1R) et les extrémités amont des conduites de passage d'admission (34F, 34R) pour l'écoulement à vitesse réduite, sur chaque rangée, communiquent avec la partie de collecteur située ducôté aval de l'extrémité amont de la conduite de passage d'admission (33F, 33R) pour l'écoulement à vitesse élevée.

18. Un système d'admission pour un moteur du type en V selon la revendication 16, dans lequel une partie de collecteur (36) qui relie depuis les extrémités amont des deux passages d'admission de collecteur (21F, 21R), est prévue d'un côté de la première rangée (1R) et un orifice de communication des extrémités amont du passage d'admission (34F, 34R) pour l'écoulement à vitesse réduite sur chaque rangée, conjointement avec la partie de collecteur, est disposé sur un côté situé au-dessus d'un orifice de communication de l'extrémité amont du passage d'admission (33F, 33R) pour l'écoulement à vitesse élevée, conjointement avec la partie de collecteur.

19. Un système d'admission pour un moteur du type en V selon la revendication 16, dans lequel une partie de collecteur (36) qui relie les extrémités amont des deux passages d'admission de collecteur (21F, 21R), est prévue d'un côté de la première rangée (1R) et un orifice de communication (16a) qui établit une communication entre les extrémités aval des deux passages de collecteur, est prévu de l'autre côté, une valve d'étranglement ou papillon des gaz (27) qui étrangle le passage d'admission et une valve (18) de commutation du passage de commutation qui ouvre et obture le passage de communication, sont prévues sur un passage d'admission commun situé du côté amont de la partie de collecteur, une valve de commutation (18) destinée à la conduite de passage d'admission (33F, 33R) pour l'écoulement à vitesse élevée et qui ouvre et obture la conduite de passage d'admission pour l'écoulement à vitesse élevée, est prévue à l'extrémité amont de la conduite de passage d'admission pour l'écoulement à vitesse élevée sur chaque rangée, dans lequel lesdites deux valves de commutation sont ouvertes dans la gamme des vitesses de rotation élevées du moteur, mais dans la gamme des vitesses de rotation moyennes, la valve de commutation du passage de communication est fermée et la valve de commutation de passage d'admission pour l'écoulement à vitesse élevée est ouverte et, dans la gamme des vitesses de rotation faibles, les deux valves de commutation sont fermées.

20. Un système d'admission pour un moteur du type en V selon la revendication 2, dans lequel les extrémités amont des deux passages de collecteur d'admission (21F, 21R) sont reliées au passage d'admission commun qui introduit de l'air d'admission dans ledit passage d'admission et ledit passage d'admission commun est formé de telle manière qu'il vienne progressivement en face du côté avant du véhicule, de façon à se trouver progressivement en face du côté amont d'une partie de liaison avec le passage d'admission de collecteur.
